(19) Europäisches Patentamt
European Patent Office
Office européen des brevets

(11) EP 1 967 541 B1

(12) # EUROPEAN PATENT SPECIFICATION

(45) Date of publication and mention of the grant of the patent:
**03.07.2013 Bulletin 2013/27**

(21) Application number: **06833023.2**

(22) Date of filing: **21.11.2006**

(51) Int Cl.:
*C08J 5/18* (2006.01) *B29C 47/14* (2006.01)
*C08B 3/22* (2006.01) *C08K 5/00* (2006.01)
*C08L 1/10* (2006.01) *G02B 5/30* (2006.01)
*G02F 1/1335* (2006.01) *B29K 1/00* (2006.01)
*B29L 7/00* (2006.01)

(86) International application number:
**PCT/JP2006/323173**

(87) International publication number:
**WO 2007/072643 (28.06.2007 Gazette 2007/26)**

(54) **Process for producing cellulose ester film**

Verfahren zur Herstellung von Celluloseesterfolie

Procédé de production du film en ester de cellulose

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2005 JP 2005367677**

(43) Date of publication of application:
**10.09.2008 Bulletin 2008/37**

(73) Proprietor: **Konica Minolta Opto, Inc.**
**Hachioji-shi,**
**Tokyo 192-8505 (JP)**

(72) Inventors:
- **NAKAMURA, Kazuaki**
  **Hino-shi, Tokyo 191-8511 (JP)**
- **TAKEDA, Akihiko**
  **Hino-shi, Tokyo 191-8511 (JP)**
- **KIYOHARA, Kazuto**
  **Hino-shi, Tokyo 191-8511 (JP)**

(74) Representative: **Henkel, Breuer & Partner**
**Patentanwälte**
**Maximiliansplatz 21**
**80333 München (DE)**

(56) References cited:
**GB-A- 459 820** **GB-A- 516 945**
**JP-A- 08 134 101** **JP-A- 2002 131 536**
**JP-A- 2003 279 729** **JP-A- 2006 113 567**
**US-A- 4 137 201** **US-A- 5 288 715**

- **DATABASE WPI Week 200115 Thomson Scientific, London, GB; AN 2001-143266 XP002681421, & JP 2000 352620 A (KONICA CORP) 19 December 2000 (2000-12-19)**
- **DATABASE WPI Week 200579 Thomson Scientific, London, GB; AN 2005-773690 XP002681422, & JP 2005 300978 A (KONICA MINOLTA OPTO KK) 27 October 2005 (2005-10-27)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 967 541 B1

## Description

### TECHNICAL FIELD

This invention relates to a process for producing a cellulose ester film, in detail, to a process for producing a cellulose ester film excellent in the uniformity of retardation as an optical property, in particular, uniformity of the retardation in the width direction of the film and the contrast.

### BACKGROOUND ART

Liquid crystal display (LCD) is widely applied as the displaying unit of word processor, personal computer, television, monitor and portable information terminal because of that the liquid crystal display can be driven at low voltage and low electric consumption and direct connected to IC circuit. The basic constitution of the LCD is a liquid crystal cell having polarization plated on both sides thereof for instance.

The polarization plate allows passing light polarized at a certain direction only. Consequently, the LCD carries important role to visualize the variation of the orientation of the liquid crystals. Therefore, the properties of the LCD are largely influenced by the properties of the polarization plate.

The polarization element of the polarization plate is prepared by that iodine is absorbed by a polymer film and then the film is stretched. A solution called as H ink containing a dichromatic substance such as iodine is absorbed by polyvinyl alcohol film in a wet system and the film is mono-axially stretched for orienting the dichromatic substance in a direction. As the protection film of the polarization plate, cellulose resin, particularly cellulose triacetate is used.

The cellulose ester film is widely used because the film is optically and physically useful as the protection film for the polarization plate. However, the cost necessary for recovering the solvent makes very large burden since the film is produced by a casting method using a halogenized solvent. Consequently, various solvents other than the halogenized type solvent have been examined but any substitutable solvent having sufficient dissolving ability has not be found. Other than the investigation of the substitution solvent, a new dissolving method such as cooling dissolving method has been tried; cf. Patent Publication 1 for example. However, industrial realization of such a method is difficult and further investigation is required.

Moreover, technology for improving the spectral property and the mechanical property by adding a hindered phenol antioxidant, a hindered amine photo-stabilizer and an oxygen scavenger in certain ratio to cellulose ester has been disclosed; cf. Patent Publication 2 for example. Technology using a polyhydric alcohol ester type plasticizer as the plasticizer; cf. Patent Publication 3 for example, and that in which the structure of the polyhydric alcohol ester type plasticizer is specifically limited; cf. Patent Publication 4, have been also disclosed. Moreover, a stabilizer composition containing various stabilizers and a phosphite ester is known for preventing the degradation of organic materials; cf. Patent Publication 5.

After all, the optical cellulose ester film accompanies high load on the production and equipment caused by the use of the solvent in the production process and is in insufficient state in the optical and mechanical properties.

Regarding the elimination of impurities contained in the cellulose ester, a method is disclosed, in which powdered cellulose ester is washed by a poor solvent or water; cf. Patent Publication 6. However, it is present condition that impurity cannot be sufficiently removed so that the remaining concentration of acetic acid as the impurity is 200 ppm, and the optical and mechanical properties of the film using such cellulose ester are insufficient and demanded to be cleared.

Recently, film formation by melt-casting the cellulose ester is tried for silver salt photographic film (cf. Patent Publication 7) or polarization element protection film (cf. Patent Publication 8). However, the cellulose ester is a polymer having very high viscosity in the melted state and high glass transition point. Therefore, the melted cellulose ester is difficultly leveled when the cellulose ester is melted and extruded through a die and cast on a cooling drum or cooling belt and solidified quickly, and it is found that thus obtained film has problems in the physical properties such as haze, bright spot and foreign matter, and in the optical properties such as the uniformity of retardation, particularly the low uniformity of retardation in the width direction.

Patent Publication 1: JP-A H10-95861
Patent Publication 2: JP-A 2003-192920
Patent Publication 3: JP-A 2003-12823
Patent Publication 4: JP-A 2003-96236
Patent Publication 5: JP-A H11-222493
Patent Publication 6: JP-A H08-134101
Patent Publication 7: JP-A H06-501040
Patent Publication 8: JP-A 2000-352620

JP 2000 352620 A proposes an optical film which contains a cellulose ester film formed by a melt-flow method. The cellulose ester film is stretched in one direction and in the perpendicular direction to that, by 1.00 to 2.50 times and 1.01 to 3.00 times, respectively. The cellulose ester film contains a nonvolatile plasticizer. In this case, the fluidized cellulose ester which may contain various kinds of additives to be used for a melt-flow method hardly contains a volatile solvent, but a solvent may be used in a part of the process to prepare the molten cellulose ester.

GB 459 820 discloses a process for stabilizing organic esters of cellulose by treatment at temperatures between 50 and 150°C with aliphatic and/or aromatic hydrocarbons, alcohols, ethers, or ketones, which are non-solvents for cellulose esters and which neither are nor become an acid in the process, or the chlorinated derivatives of these compounds.

US 4 137 201 is directed to a cellulose ester plastic composition containing a thermally stabilizing amount of the combination of at least one cyclic phosphonite compound, a conventional antioxidant, and an acid accepting epoxide.

GB 516 945 discloses a process for stabilising simple or mixed organic esters of cellulose which have been prepared by esterifying cellulose according to the non-solvent or suspension method in the presence of at least one catalyst containing sulphuric acid radicals by removing the harmful contaminations by treating the ester in at least two steps in the undissolved state with at least one treatment liquid containing at least one alcohol.

JP 2005 300978 A relates to a retardation film which comprises a cellulose ester film produced by forming a cellulose ester resin sheet by a melt flow film forming method and stretching and orienting the resin sheet in the width direction, and has 20 to 100 μm thickness, 20 to 100 nm retardation (Ro) in the plane and 90 to 200 nm retardation (Rt) in the thickness direction.

## DISCLOSURE OF THE INVENTION

### PROBLEMS TO BE SOLVED

The object of the invention is to provide a process for producting a cellulose ester film excellent in the uniformity of retardation, particularly in the width direction of the film, and the contrast.

### MEANS FOR SOLVING THE PROBLEMS

The objects of the invention can be attained by the following constitution.

1. A process for producing cellulose ester film comprising the steps of washing suspension of cellulose ester by an organic poor solvent of cellulose ester in the presence of an antioxidant to obtain cellulose ester in solid state having a free acid content of not more than 50 ppm, and forming film by melting and casting the cellulose ester.
2. The process for producing cellulose ester film described in the above 1, in which the antioxidant is a phenol compound.
3. The process for producing cellulose ester film described in the above 1 or 2, in which the antioxidant is a hindered amine type compound, a phosphite ester type compound or a sulfur type compound.
4. The process for producing cellulose ester film described in any one of the above 1 to 3, in which the antioxidant is a compound having a phenol structure and a hindered amine structure in the molecule thereof or a compound having a phenol structure and a phosphite ester structure in the molecule thereof.
5. The process for producing cellulose ester film described in any one of the above 1 to 4, in which the organic poor solvent of cellulose ester is a protic polar solvent having 1 to 4 carbon atoms.
6. The process for producing cellulose ester film described in any one of the above 1 to 5, in which the amount of the free organic acid contained in the cellulose ester is within the range of from 1 to 20 ppm.

### EFFECTS OF THE INVENTION

The process for producing the cellulose ester film excellent in the uniformity of retardation, particularly that in the width direction of the film, and the contrast can be provided by the invention.

### THE BEST MODE FOR CARRYING OUT THE INVENTION

The best mode for carrying out the invention is described below but the invention is not limited thereto.

The process for producing the cellulose ester film of the invention is characterized in that cellulose ester is suspended and washed in a poor solvent of the cellulose ester in the presence of an antioxidant to obtain the cellulose ester in solid state having a free acid content of not more than 50 ppm and the solid cellulose ester is used for forming the film by melt-casting.

Solution casting method as a cellulose ester film forming method is a method in which a solution prepared by dissolving the cellulose ester in a solvent is cast and dried by evaporating the solvent. In this process, the solvent remaining in the film has to be removed. Therefore, the investment in the producing line and the production cost caused by the drying line, drying energy and recovering and recycling of the evaporated solvent are massively raised, and the reduction of such the cost becomes important subject.

In contrast, the load caused by the drying and equipment is not caused because any solvent to be used to prepare the cellulose ester solution for the solution casting is not used in the film formation by melt-casting method.

An acid such as an alkyl carboxylic acid and sulfuric acid generally remains in the cellulose ester in the course of the production thereof and causes coloring and viscosity lowering of the cellulose ester on the occasion of the melt-casting film formation and the optical and mechanical properties such as haze, transparency and retardation are degraded.

It is found by the inventor as a result of their investigation that the ununiformity of retardation in the width direction can be reduced and the optical property such as contrast can be improved by suspending and washing the cellulose ester by a poor solvent of cellulose ester in the presence of the antioxidant to prepare solid cellulose ester having a free acid content of not more than 50 ppm and melt-casting thus prepared solid cellulose ester to form the film.

JP-A 58-22510 describes an esterifying method using a lactide together with N,N-dimethylacetamide, N-methyl-2-pyrrolidone, 1,3-dimethyl-2-imidazolidinone or a mixture of them each containing lithium chloride as the solvent and JP-A H06-504010 describes a method for introducing acetyl group or propionyl group using magnesium carbonate or potassium carbonate, and citric acid, sulfuric acid, acetic anhydride, propionic anhydride, acetic acid or propionic acid. JP-A H10-45804 describes an esterifying reaction using acetic acid or acetic anhydride and an organic acid having 3 or more carbon atoms or anhydride thereof and sulfuric acid as catalyst and JP-A 2003-252901 describes acetylating reaction by acetic acid or acetic anhydride and sulfuric acid as catalyst. However, any washing process such as that of the invention is not performed in the esterifying procedures described in the above.

JP-B S53-15165 proposes a method in which fibrous cellulose acetate slurry precipitated from an acetone solution of cellulose acetate is sheared so that the surface area thereof becomes to 35 to 55 $m^2$/g and the sheared slurry is continuously made sediment on a porous support and filtered and then washed by a non-dissolvable liquid to remove acetone. Moreover, JP-A H10-298201 proposes a method in which a cellulose ester solution containing an organic acid is ejected from a nozzle into a precipitating agent and applying shearing force to prepare fibril cellulose ester and then the fibril cellulose ester is loosed or fractured, washed and alkaline treated. In both of the above methods, the cellulose ester is washed by using the solution and not a method using the powdered cellulose eater; therefore the methods are different from the necessary condition of the invention.

Furthermore, it is found that the contrast can be improved when the cellulose ester film is produced by the melt-casting method compared with the cellulose ester film produced by the solution casting method.

In the invention, the melt-casting is defined as a method on which the cellulose ester is melted by heating until a temperature at which the cellulose ester displays fluidity without using any solvent and cast. The film forming method by heat melting can be classified in detail into a melt-extrusion method, a press forming method, an inflation method, a blow forming method and a stretching forming method. Among them, the melt-extrusion method is superior for obtaining an optical film excellent in the mechanical strength and the surface precision. The melt-casting film forming method is included in the process for producing cellulose ester film of the invention, in which the film constitution materials are heated until fluidity is appeared and extruded onto a drum or an endless belt.

(Antioxidant to be used for washing of cellulose ester)

As the antioxidant to be used for suspension washing of the cellulose ester by the poor solvent, compounds capable of inactivating radicals generated in the cellulose ester or inhibiting the degradation of the cellulose ester caused by addition of oxygen to the radical generated in the cellulose ester are usable without any limitation. Among the compounds, phenol type compounds, hindered amine type compounds, phosphor type compounds, sulfur type compounds, heat resistive process stabilizers and oxygen scavengers are cited as useful antioxidant. Particularly, the phenol type compounds, hindered amine compounds and phosphor type compounds are preferred. Coloring and strength lowering of the formed product caused by heat and thermal oxidation degradation on the occasion of melt formation can be prevented without lowering in the transparency and thermal resistivity. These antioxidants may be sued solely or in combination of two or more kinds thereof.

The phenol compounds are known compounds and preferable example includes a 2,6-dialkylphenol compound as disclosed, for example, in columns 12 to 14 of US Patent 4,839,405). As the hindered phenol compound, there is a compound represented by the following formula A,

Formula A

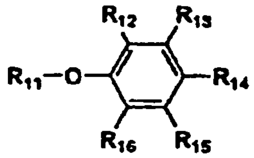

In the formula, $R_{11}$, $R_{12}$, $R_{13}$, $R_{14}$ and $R_{15}$ represent a substituent. Examples of the substituent include: a halogen atom (for example, a fluorine atom and a chlorine atom), an alkyl group (for example, a methyl group, an ethyl group, an isopropyl group, a hydroxyethyl group, a methoxy methyl group, a trifluoro methyl group and a t-butyl group), a cycloalkyl group (for example, a cyclopentyl group and a cyclohexyl group), an aralkyl group (for example, a benzyl group and a 2-phenethyl group), an aryl group (for example, a phenyl group, a naphthyl group, p-tolyl group and a p-chlorophenyl group), an alkoxy group (for example, a methoxy group, an ethoxy group, an isopropoxy group and a butoxy group), an aryloxy groups (for example, a phenoxy group), a cyano group, an acylamino group (for example, an acetylamino group and a propionylamino group), an alkylthio group (for example, a methylthio group, an ethylthio group and a butylthio group), an arylthio group (for example, a phenylthio group), a sulfonylamino group (for example, a methanesulfonylamino group and a benzene sulfonyl amino group), an ureido group (for example, a 3-methylureido group, a 3,3-dimethylureido group and a 1,3-dimethylureido group), a sulfamoylamino group (a dimethylsulfamoyl amino group), a carbamoyl group (for example, a methylcarbamoyl group, an ethylcarbamoyl group and a dimethylcarbamoyl group), a sulfamoyl group (for example, an ethylsulfamoyl group and a dimethylsulfamoyl group), an alkoxycarbonyl group (for example, a methoxycarbonyl group and an ethoxycarbonyl group), an aryloxycarbonyl group (for example, a phenoxycarbonyl group), a sulfonyl group (for example, a methanesulfonyl group, a butane sulfonyl group and a phenylsulfonyl group), an acyl group (for example, an acetyl group, a propanoyl group and a butyroyl group), an amino group (a methylamino group, an ethylamino group and a dimethylamino group), a cyano group, a hydroxy group, a nitro group, a nitroso group, an amine oxide group (for example, a pyridine oxide group), an imide group (for example, a phthalimide group), a disulfide group (for example, a benzene disulfide group and a benzothiazolyl-2-disulfide group), a carboxyl group, a sulfo group and a heterocycle group (for example, a pyrrole group, a pyrrolidyl group, a pyrazolyl group, an imidazolyl group, a pyridyl group, a benzimidazolyl group, a benzothiazolyl group and a benzoxazolyl group). These substitutes may be further substituted. A phenol compound having $R_{11}$ being a hydrogen atom, and $R_{12}$ and $R_{16}$, being t-butyl group is preferable. Examples of the phenol compounds include n-octadecyl 3-(3,5-di-t-butyl-4-hydroxyphenyl) propionate, n-octadecyl 3-(3,5-di-t-butyl-4-hydroxyphenyl)acetate, n-octadecyl 3,5-di-t-butyl-4-hydroxybenzoate, n-hexyl 3,5-di-t-butyl-4-hydroxybenzoate, n-dodecyl 3,5-di-t-butyl-4-hydroxyohenylbenzoate, neo-dodecyl 3-(3,5-di-t-butyl-4-hydroxyphenyl)propionate, dodecyl β-(3,5-di-t-butyl-4-hydroxyphenyl)propionate, ethyl α-(4-hydroxy-3,5-di-t-butylphenyl)isobutyrate, octadecyl α-(4-hydroxy-3,5-di-t-butylphenyl)isobutyrate, octadecyl α-(4-hydroxy-3,5-di-t-butyl-4-hydroxyphenyl)propionate, 2-(n-octylthio)ethyl 3,5-di-t-butyl-4-hydroxybenzoate, 2-(n-octylthio)ethyl 3,5-di-t-butyl-4-hydroxyphenylacetate, 2-(n-octadecylthio)ethyl 3,5-di-t-butyl-4-hydroxyphenylacetate, 2-(n-octadecylthio)ethyl 3,5-di-t-butyl-4-hydroxybenzoate, 2-(2-hydroxyethylthio)ethyl 3,5-di-t-butyl-4-hydroxybenzoate, diethylglycol bis(3,5-di-t-butyl-4-hydroxyphenyl)propionate, 2-(n-octadecylthio)ethyl 3-(3,5-di-t-butyl-4-hydroxyphenyl)propionate, stearylamide N,N-bis-[ethylene 3-(3,5-di-t-butyl-4-hydroxyphenyl)propionate], n-butylimino N,N-bis-[ethylene 3-(3,5-di-t-butyl-4-hydroxyphenyl)propionate], 2-(2-stearoyloxyethylthio)ethyl 3,5-di-t-butyl-4-hydroxybenzoate, 2-(2-stearoyloxyethylthio)ethyl 7-(3-methyl-5-t-butyl-4-hydroxyphenyl)heptanoate, 1,2-propylene glycol bis[3-(3,5-dit-butyl-4-hydroxyphenyl)propionate], ethylene glycol bis[3-(3,5-di-t-butyl-4-hydroxyphenyl)propionate], neopentyl glycol bis[3-(3,5-di-t-butyl-4-hydroxyphenyl)propionate], ethylene glycol bis(3,5-di-t-butyl-4-hydroxyphenylacetate), glycerin-1-n-octadecanoate-2,3-bis(3,5-di-t-butyl-4-hydroxyphenylacetate), pentaerythritol tetrakis[3-(3',5'-dit-butyl-4'-hydroxyphenyl)propionate], 1,1,1-trimethylolethane tris[3-(3,5-di-t-butyl-4-hydroxyphenyl)propionate], sorbitol hexa[3-(3,5-di-t-butyl-4-hydroxyphenyl)propionate], 2-hydroxyethyl 7-(3-methyl-5-t-butyl-4-hydroxyphenyl)propionate, 2-stearoyloxyethyl 7-(3-methyl-5-t-butyl-4-hydroxyphenyl)heptanoate, 1,6-n-hexane diol-bis[(3',5'-di-t-butyl-4-hydroxyphenyl)propionate], pentaerythritol tetrakis (3,5-di-t-butyl-4-hydroxycinnamate).

As typical examples of the hindered phenol compound above, there are "IRGANOX 1076" and "IRGANOX 1010" available from Ciba Specialty Chemicals Co.

Preferable examples of the hindered amine compounds are those represented by Formula (B).

Formula (B)

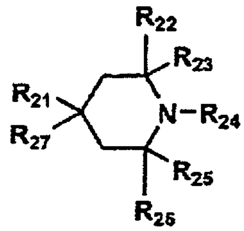

In the formula, $R_{21}$, $R_{22}$, $R_{23}$, $R_{24}$, $R_{25}$, $R_{26}$, and $R_{27}$ represent a substituent. The substituent is the same group as described in the Formula (A). $R_{24}$ is preferably a hydrogen atom and a methyl group, $R_{27}$ is preferably a hydrogen atom, and $R_{22}$, $R_{23}$, $R_{25}$, $R_{26}$, are preferably a methyl group.

Examples of the hindered amine compound include bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl)2-(3,5-di-t-butyl-4-hydroxybenzyl)-2-butylmalonate, bis (1-acroyl-2,2,6,6-tetramethyl-4-piperidyl) 2,2-bis(3,5-di-t-butyl-4-hydroxybenzyl)-2-butylmalonate, bis(1,2,2,6,6-pentamethyl-4-piperidyl) decanedioate, 2,2,6,6-tetramethyl-4-piperidyl methacrylate, 4-[3-(3,5-di-t-butyl-4-hydroxyphenyl) propionyloxy]-1-[2-(3-(3,5-di-t-butyl-4-hydroxyphenyl) propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl) propione amide, tetrakis(2,2,6,6-tetramethyl-4-piperidyl) 1,2,3,4-butanetetracarboxylate and tetrakis(1,2,2,6,6-pentamethyl-4-piperidyl) 1,2,3,4-butanetetracarboxylate.

These include high molecular weight compounds. Examples thereof include, but not limitative, high molecular weight HALS in which a plural number of piperidine rings are bonded via a triazine skeleton, such as N,N',N'',N'''-tetrakis-[4,6-bis-{butyl-(N-methyl-2,2,6,6-tetramethylpiperidine-4-yl)amino}-triazine-2-yl]-4,7-diazadecane-1,10-diamine, a polycondensation product of dibutyl amine, 1,3,5-triazine, N,N'-bis(2,2,6,6-tetramethyl-4-piperidyl)-1,6-hexamethylenediamine, and N-(2,2,6,6-tetramethyl-4-piperudyl)butylamine, a polycondensation product of dibutyl amine, 1,3,5-triazine and N,N'-bis(2,2,6,6-tetramethyl-4-piperidyl)butylamine, poly[{(1,1,3,3-tetramethylbutyl)amino-1,3,5-triazine-2,4,diyl}[(2,2,6,6-tetramethyl-4-pyperidyl)imino]-hexamethylene[(2,2,6,6-tetramethyl-4-piperidyl)imino]], a polycondensation product of 1,6-hexanediamine-N,N'-bis(2,2,6,6-tetramethyl-4-piperidyl) and morphorine-2,4,6-trichloro-1,3,5-triazine, poly[(6-morphorino-s-tiazine-2,4-diyl)(2,2,6,6-tetramethyl-4-piperidyl)imino]-hexamethylene[(2,2,6,6-tetramethyl-4-piperidyl)iminol; and a high molecular weight HALS in which a piperidine ring is bonded via an ester bond such as a polymer of dimethyl succinate and 4-hydroxy-2,2,6,6-tetramethyl-1-piperidineethanol, a mixed esterified compound of 1,2,3,4-butane tetracarboxylic acid, 1,2,2,6,6-pentamethyl-4-pyperidinol and 3,9-bis(2-hydroxy-1,1-dimethylethyl)-2,4,8,10-tetraoxaspiro[5,5]undecane.

Among these, preferably are a polycondensation product of dibutyl amine, 1,3,5-triazine and N,N'-bis(2,2,6,6-tetramethyl-4-piperidyl)butylamine, poly[{(1,1,3,3-tetramethylbutyl)amino-1,3,5-triazine-2,4-diyl}[(2,2,6,6-tetramethyl-4-piperidyl)imino]-hexamethylene[(2,2,6,6-tetramethyl-4-piperidyl)imino]], and a polymer of dimethyl succinate and 4-hydroxy-2,2,6,6-tetramethyl-1-pyperidineethanol, each having a Mn of 2,000 - 5,000.

The hindered amine compounds described above are available in the name of TINUVIN 144 and TINUVIN 770, marketed from Ciba Specialty Chemicals, or ADK STAB LA-52 from ADEKA Corporation.

The phosphorus-containing compound used in this invention is preferably a compound having a partial substructure represented by following Formula (C-1), (C-2), (C-3) in a molecule.

Formula (C-1)

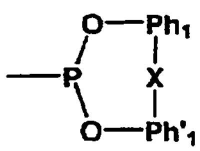

Formula (C-2)

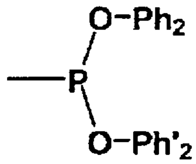

Formula (C-3)

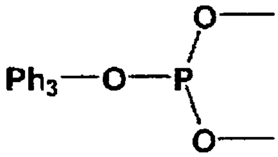

In the Formula, $Ph_1$ and $Ph'_1$ each represents a phenylene group, and the hydrogen atom of the phenylene group may be substituted with a phenyl group, an alkyl group having 1 to 8 carbon atoms, a cycloalkyl group having 5 to 8 carbon atoms, an alkylcycloalkyl group having 6 to 12 carbon atoms, or an aralkyl group having 7 to 12 carbon atoms. $Ph_1$ and $Ph'_1$ may be the same or different. X represents a single bond, a sulfur atom, or a $-CHR_6-$ group. $R_6$ represents a hydrogen atom, an alkyl group having 1 to 8 carbon atoms, or a cycloalkyl group having 5 to 8 carbon atoms. $Ph_2$ and $Ph'_2$ each represents a phenyl or biphenyl group, and the hydrogen atom of the phenyl or biphenyl group may be substituted with an alkyl group having 1 to 8 carbon atoms, a cycloalkyl group having 5 to 8 carbon atoms, an alkylcycloalkyl group having 6 to 12 carbon atoms, or an aralkyl group having 7 to 12 carbon atoms. $Ph_2$ and $Ph'_2$ may be the same or different. $Ph_3$ represents a phenyl or biphenyl group, and the hydrogen atom of the phenyl or biphenyl group may be substituted with an alkyl group having 1 to 8 carbon atoms, a cycloalkyl group having 5 to 8 carbon atoms, an alkylcycloalkyl group having 6 to 12 carbon atoms, or an aralkyl group having 7 to 12 carbon atoms. These may be further substituted with a substituent represented by the Formula (A) mentioned above.

A phosphor compound includes, for example, a monophosphite type compound such as triphenylphosphite, diphenylisodecylphosphite, phenyldiisodecylphosphite, tris(nonylphenyl)phosphite, tris(dinonylphenyl)phosphite, tris (2,4-di-t-butylphenyl)phosphite and 10-(3,5-di-t-butyl-4-hydroxybenzyl)-9,10-dihydro-9-oxa-10-phosphophenanthrene-10-oxide, 6-[3-(3-t-butyl-4-hydroxy-5-methylphenyl)propoxy]-2,4,8,10-tetra-t-butyldibenz[d,f][1.3.2]dioxaphosphepin; and a diphosphite type compound such as 4,4'-butylidene-bis(3-methyl-6-t-butylphenyl-di-tridecylphosphite), and 4,4'-isopropylidene-bis(phenyl-di-alkyl(C12 - C15)phosphite). And further it includes a phosphonite compound such as tetrakis (2,4-di-t-butyl-phenyl)4,4'-biphenylenediphosphonite and tetrakis(2,4-di-t-butyl-5-methylphenyl)4,4'-biphenylenediphosphonite. The phosphor compounds described above are available in the name of SUMILIZER GP, marketed from Sumitomo Chemical Co., Ltd., ADK STAB PEP-24G and ADK STAB PEP-36 from ADEKA Corporation, IRGAFOS P-EPQ from Ciba Specialty Chemicals, or GSY-P101 from Sakai Chemical Industries, Co., Ltd.

In this invention, a sulfur compound resented by Formula (D) may be used as an antioxidant.

Formula (D) $R_{31}-S-R_{32}$

In the Formula, $R_{31}$ and $R_{32}$ each represent a hydrogen atom or a substituent. The substituent is the same as the substituent described for Formula (A). $R_{31}$ and $R_{32}$ each are preferably an alkyl group.

Examples of the sulfur-containing compound include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis (β-lauryl-thiopropionate), and 3,9-bis(2-dodecylthioethyl)-2,4,8,10-tetra-oxaspiro[5,5]undecane. The sulfur-containing compounds listed above have been commercialized, for example, as "Sumilizer TPL-R" and "Sumilizer TP-D" from Sumitomo Chemical Co., Ltd.

The mixture of the anti-oxidants may be employed in this invention. It is preferred that the anti-oxidant is a compound having a phenol and hindered amine structure in a molecule, or a compound having a phenol and phosphite ester structure in a molecule.

These compounds have been commercialized, for example, as TINUVIN 144 from Ciba Specialty Chemicals and Sumilizer GP from Sumitomo Chemical Co., Ltd.

The amount of the antioxidant to be added is usually 0.01 - 10 parts by weight, preferably 0.05 - 5, and more preferably 0.1 - 3 parts by weight based on 100 parts of cellulose ester.

Similarly to the case of the aforementioned cellulose ester, the antioxidant preferably removes the impurities such as residual acid, inorganic salt and organic low-molecule compound that have been carried over from the process of manufacturing, or that have occurred during preservation. More preferable is to have a purity of 99% or more. The

amount of residual acid and water is preferably 0.01 through 100 ppm. This reduces thermal deterioration in the melt-casting film formation of the cellulose ester, and improves the film formation stability, the optical property and the mechanical property of the film.

An amount of the anti-oxidant employed in suspension washing of cellulose ester may remain in the washed cellulose ester. The residual amount is preferably 0.01 - 2,000 ppm, more preferably 0.05 - 1,000 ppm, further preferably 0.1 - 100 ppm.

(Washing of cellulose ester by poor solvent)

The organic acid content of not more than 50 ppm of the composition for melt-casting film formation of the invention can be attained by washing the cellulose ester by the following organic poor solvent.

The organic poor solvent usable for washing the cellulose ester of the invention can be selected according to the solubility of the cellulose ester. As the solvent to be solely used for washing, a none-polar solvent such as hexane, heptane, octane, cyclohexane, benzene, toluene, dimethyl ether, diethyl ether, dipropyl ether and diisopropyl ether and a protic polar solvent such as methanol, ethanol, 1-propanol, 2-propanole and butanol are preferable but the solvent is not limited to the above. Hexane, heptane, diisopropyl ether, methanol and ethanol are preferable and heptane and methanol are more preferable.

When a mixture solvent composed of two or more kinds of the solvent is used, it is preferable to combine a solvent having high dissolving ability to the cellulose ester, for example, a non-polar solvent such as methyl acetate, ethyl acetate, tetrahydrofuran, methylene chloride and chloroform and a non-protic solvent such as acetone, acetonitrile, N,N-dimethylformamide or dimethylsulfoxide are usable with the above poor solvent of cellulose ester.

The use of a solvent having high boiling point is disadvantageous from the viewpoint of energy consumption and production efficiency since prolonged time is required for drying even when reduced pressure drying is applied. An organic solvent having low boiling point is unsuitable for washing of the cellulose ester because the washing temperature is lowered so that the washing efficiency is lowered and the equipment cost is increase for a temperature controlling apparatus and cooling piping. The boiling point of the solvent to be used in the invention is preferably from 30 °C to 150 °C and more preferably from 50 °C to 100 °C.

(Suspension washing of cellulose ester)

It is the essential matter of the invention that the cellulose ester is subjected to suspension washing in the washing process of the invention.

The suspension washing in the invention means that the cellulose ester in a solid state is washed by immersing in the poor solvent of the cellulose ester. It is preferable that the solid cellulose ester is stirred in a suspended state with temperature, kind and amount of the solvent in which the cellulose ester cannot be completely dissolved and then filtered and dried though the method is not specifically limited. The state of solid cellulose is powder or pellets and preferably powder. The vessel and the stirrer used for the washing are not specifically limited and a vessel made from stainless steel and a stirrer available on the market are preferably usable.

The solvent to be used for the suspension washing of the invention is the solvents described in the above poor solvent of the cellulose ester. The using amount of the solvent is preferably from 1 to 30, more preferably from 3 to 20, and further preferably 5 to 10 parts by weight of the cellulose ester.

The stirring temperature is preferably from 10 to 200 °C, more preferably from 20 to 150 °C, and further preferably from 30 to 100 °C.

The stirring time is preferably from 0.1 to 24 hours, more preferably from 0.5 to 12 hours, and further preferably from 1 to 5 hours.

The drying temperature is preferably from 10 to 200 °C, more preferably from 20 to 150 °C, and further preferably from 30 to 100 °C. The pressure may be ordinary pressure or reduced pressure and ordinary pressure is preferable.

In the cellulose ester, hydrolysis at the substituted position is gradually progressed under living environment (not more than 50 °C and not more than 90% RH). The properties of the film such as the ununiformity of retardation in the width direction, haze and bright spot causing foreign matter are improved by applying the washing of the invention for removing the free acid derived from the production process but the amount of the free acid is gradually increased and properties of the film is degraded accompanied with passing of time from the washing in the production process. The period of time from the production of the cellulose ester to the film formation is preferably not more than 3 years, more preferably mot more than 1 year, and further preferably not more than 6 months though the period is not specifically limited when the washing of the invention is repeated just before the film formation. The washing is preferably applied just after the production of the cellulose ester because the twice applying of the washing just after the cellulose ester and just before the film formation is disadvantageous from the viewpoint of the cost. In such case, the period of time to the film production is preferably not more than 1 year, more preferably not more than 6 months, and further preferably

not more than 3 months.

(Free acid)

As the free acid, a carboxylic acid derivative of the raw material which cannot be removed in the production process and sulfuric acid used as the catalyst of the esterification are cited. Moreover, a carboxylic acid derivative released from the cellulose ester in the period of from the production to the use is also included.
These free acids can be determined by the following method.

<Pretreatment>

In a container made from PP, 500 mg (M) of the sample is weighed and 10 ml of ultra pure water was added.
The resultant was dispersed for 30 minutes by an ultrasonic cleaner and filtered by an aqueous chromatographic disc (0.45 μm) to prepare a sample.

(Determination of acetic acid and propionic acid)

Apparatus: Ionchromatograph DX-500, manufactured by Dionex Corp.

Column: Dionex IonPac ICE-AS1
Suppressor: AMMS-II
Elutriant: 1.0 mM Octanesulfonic acid
Regeneration solution: 5.0 mM Tetrabutylammonium hydroxide (transferred by high purity nitrogen with a pressure of 35 kPa)
Flowing rate: 1.0 ml/min.
Injection amount: 25 μl

(Determination of $SO_4$)

Apparatus: Ionchromatograph DX-120
Column: IonPac AG14 (4 mm) + IonPac AS14 (4 mm)
Suppressor: ASRS-ULTRA II (4 mm)
Elutriant: 3.5 mM $Na_2CO_3$, 1.0 mM $NaHCO_3$
SRS current: 50 mA
Flowing rate: 1.0 ml/min.
Injection amount: 25 μl
Calculation:

Content (ppm) = Measured value (mg/l)/1000 x 10/M (mg) x 1000000

The total amount of the free acid of the carboxylic acid derivative and sulfuric acid used as the catalyst existing after the suspension washing of the cellulose ester is preferably not more than 50 ppm and more preferably from 1 to 20 ppm.

(Cellulose ester)

The cellulose ester of this invention is a single or mixed acid ester of cellulose containing at least any one of structures of an aliphatic acyl group, a substituted or no-substituted aromatic acyl group.
Examples of the benzene ring substituent group when the aromatic ring in the aromatic acyl group is a benzene ring include a halogen atom, a cyano group, an alkyl group, an alkoxy group, aryl group, an aryloxy group, an acyl group, a carbonamide group, a sulfonamide group, a ureido group, an aralkyl group, a nitro group, an alkoxy carbonyl group, an aryloxy carbonyl group, an aralkyloxy carbonyl group, a carbamoyl group, a sulfamoyl group, an acyloxy group, an alkenyl group, an alkinyl group, an alkyl sulfonyl group, an aryl sulfonyl group, an alkyloxy sulfonyl group, an aryloxy sulfonyl group, an alkyl sulfonyloxy group, and an aryloxy sulfonyl group, -S-R, -NH-CO-OR, -PH-R, $-P(-R)_2$, -PH-O-R,

-P(-R)(-O-R), $-P(-O-R)_2$, $-PH(=O)-R-P(=O)(-R)_2$,-PH(=O)-O-R, -P(=O)(-R)(-O-R), $-P(=O)(-O-R)_2$, -O-PH(=O)-R, $-O-P(=O)(-R)_2$-O-PH(=O)-O-R, -O-P(=O)(-R)(-O-R), $-O-P(=O)(-O-R)_2$, -NH-PH(=O)-R, -NH-P(=O)(-R)(-O-R), $-NH-P(=O)(-O-R)_2$, $-SiH_2-R$, $-SiH(-R)_2$, $-Si(-R)_3$, $-O-SiH_2-R$, $-O-SiH(-R)_2$ and $-O-Si(-R)_3$. R above is a fatty acid group, an aromatic group, or a heterocyclic group. The number of substituent groups is preferably between 1 and 5, more preferably between 1 and 4 and still more preferably between 1 and 3, and most preferably either 1 or 2. Examples of the substituent group preferably include a halogen atom, cyano, an alkyl group, an alkoxy group, an aryl group, an aryloxy group, an acyl group, a carbonamide group, a sulfonamide group, and a ureido group, and more preferably a halogen atom, cyano, an alkyl group, an alkoxy group, an aryloxy group, an acyl group and a carbonamide group, and still more preferably a halogen atom, cyano, an alkyl group, an alkoxy group, and an aryloxy group, and most preferably a halogen atom, an alkyl group, and an alkoxy group.

Examples of the halogen atom include a fluorine atom, a chlorine atom, a bromine atom, and an iodine atom. The alkyl group may have ring structure or may be branched. The number of carbon atoms in the alkyl group is preferably 1 - 20, more preferably 1 - 12, still more preferably 1 - 6, and most preferably 1 - 4. Examples of the alkyl group include methyl, ethyl, propyl, isopropyl, butyl, t-butyl, hexyl, cyclohexyl, octyl and 2-ethyl hexyl. The alkoxy group may have ring structure or may be branched. The number of carbon atoms in the alkoxy group is preferably 1 - 20, more preferably 1 - 12, still more preferably 1 - 6, and most preferably 1 - 4. The alkoxy group may be further substituted with another alkoxy group. Examples of the alkoxy group include a methoxy, ethoxy, 2-methoxyethoxy, 2-methoxy-2-ethoxyethoxy, butyloxy, hexyloxy and octyloxy.

The number of carbon atoms in the aryl group is preferably 6 - 20, and more preferably 6 - 12. Examples of the aryl group include phenyl and naphthyl. The number of carbon atoms in the aryloxy group is preferably 6 - 20, and more preferably 6 - 12. Examples of the aryloxy group include phenoxy and naphthoxy. The number of carbon atoms in the acyl group is preferably 1 - 20, and more preferably 1 - 12. Examples of the acyl group include formyl, acetyl, and benzoyl. The number of carbon atoms in the carbonamide group is preferably 1 - 20, and more preferably 1 - 12. Examples of the carbonamide include acetamide and benzamide. The number of carbon atoms in the sulfonamide group is preferably 1 - 20, and more preferably 1 - 12. Examples of the sulfonamide include methane sulfonamide, benzene sulfonamide, and p-toluene sulfonamide. The number of carbon atoms in the ureido group is preferably 1 - 20, and more preferably 1 - 12. Examples of the ureido group include (unsubstituted) ureido.

The number of carbon atoms in the aralkyl group is preferably 7 - 20, and more preferably 7 - 12. Examples of the aralkyl group include benzyl, phenethyl, and naphthyl methyl. The number of carbon atoms in the alkoxycarbonyl group is preferably 1 - 20, and more preferably 2 - 12. Examples of the alkoxycarbonyl group include methoxy carbonyl. The number of carbon atoms in the aryloxy carbonyl group is preferably 7 - 20, and more preferably 7 - 12. Examples of the aryloxy carbonyl group include phenoxy carbonyl. The number of carbon atoms in the aralkyloxycarbonyl is preferably 8 - 20, and more preferably 8 - 12. Examples of the aralkyloxycarbonyl include benzyloxycarbonyl. The number of carbon atoms in the carbamoyl group is preferably 1 - 20, and more preferably 1 - 12. Examples of the carbamoyl group include (unsubstituted) carbamoyl and N-methyl carbamoyl. The number of carbon atoms in the sulfamoyl group is preferably no greater than 20, and more preferably no greater than 12. Examples of the sulfamoyl group include (unsubstituted) sulfamoyl and N-methyl sulfamoyl. The number of carbon atoms in the acyloxy group is preferably 1 - 20, and more preferably 2 - 12. Examples of the acyloxy group include acetoxy and benzoyloxy.

The number of carbon atoms in the alkenyl group is preferably 2 - 20, and more preferably 2 - 12. Examples of the alkenyl group include vinyl, aryl and isopropenyl. The number of carbon atoms in the alkinyl group is preferably 2 - 20, and more preferably 2 - 12. Examples of the alkinyl group include thienyl. The number of carbon atoms in the alkyl sulfonyl group is preferably 1 - 20, and more preferably 1 - 12. The number of carbon atoms in the aryl sulfonyl group is preferably 6 - 20, and more preferably 6 - 12. The number of carbon atoms in the alkyloxy sulfonyl group is preferably 1 - 20, and more preferably 1 - 12. The number of carbon atoms in the aryloxy sulfonyl group is preferably 6 - 20, and more preferably 6 - 12. The number of carbon atoms in the alkyl sulfonyloxy group is preferably 1 - 20, and more preferably 1 - 12. The number of carbon atoms in the aryloxy sulfonyl is preferably 6 - 20, and more preferably 6 - 12.

In the cellulose ester of the invention, in the case where the hydrogen atom of the hydroxyl group portion of the cellulose is a fatty acid ester with a fatty acid acyl group, the number of carbon atoms in the fatty acid acyl group is 2 - 20, and specific examples thereof include acetyl, propionyl, butyryl, isobutyryl, valeryl, pivaloyl, hexanoyl, octanoyl, lauroyl, stearoyl and the like.

The aliphatic acyl group in the invention also refers to one which is further substituted, and examples of the substituent include those which when the aromatic ring in the aromatic acyl group described above is a benzene ring, are denoted in the substituents of the benzene ring.

When the ester group of cellulose ester has an aromatic ring, the number of the substituent groups X on the aromatic ring should be 0 or 1 - 5, preferably 1 - 3, and 1 or 2 is particularly preferable. In addition, when the number of substituent groups substituted on the aromatic ring is 2 or more, the substituent groups may be the same or different from each other, and they may also bond with each other to form a condensed polycyclic ring (such as naphthalene, indene, indane, phenanthrene, quinoline, isoquinoline, chromene, chroman, phthalazine, acridine, indole, indoline and

the like).

The cellulose ester has in the ester group a structure selected from at least one of a substituted or unsubstituted aliphatic acyl group or a substituted or unsubstituted aromatic acyl group, and this may be a single acid cellulose ester or a mixed acid cellulose ester, and two or more types of cellulose esters may be used in combination, in this invention.

The cellulose ester used in the invention is preferably at least one type selected from cellulose acetate, cellulose propionate, cellulose butyrate, cellulose acetate propionate, cellulose acetate butyrate, cellulose acetate phthalate and cellulose phthalate.

A degree of substitution of the lower aliphatic acid esters such as cellulose acetate propionate and cellulose acetate butyrate, which are preferred as the mixed aliphatic acid cellulose ester, have an acyl group having 2 to 4 carbon atoms as the substituent. The resin which satisfy both formula (1) and formula (2) below, are preferred, wherein X represents a degree of substitution of the acetyl group; and Y represents a degree of substitution of the propionyl group or the butyryl group. The substitution degree of the acyl group can be measured according to ASTM-D817-96.

$$\text{formula (1)} \qquad 2.5 \leq X + Y \leq 2.9$$

$$\text{formula (2)} \qquad 0.1 \leq X \leq 2.0$$

Cellulose acetate propionate is preferably used herein, and of the cellulose acetate propionates, those that satisfy $1.0 \leq X \leq 2.5$ and $0.5 \leq Y \leq 2.5$ are particularly preferable. It is allowed that the optical film satisfied the above condition by blending cellulose esters having different acyl substitution degree of substitution, as a whole. A portion, which is not substituted with acyl group, usually exists as a hydroxy group. These may be synthesized by a known method.

The degree of substitution of acyl group such as acetyl, propionyl and butyl group is measured by a method according to ASTM-D817-96.

The number average molecular weight of the cellulose ester used in the optical film of this invention is preferably 50,000 - 300,000 as the high mechanical strength of the film is obtained. Particularly preferable is 60,000 - 200,000.

In the cellulose ester used in the invention, the ratio of the weight average molecular weight Mw/number average molecular weight Mn is preferably 1.5 - 5.5, while 2.0 - 4.5 is particularly preferable, 2.5 - 5.0 is more preferable and 2.3 - 4.0 is even more preferable.

The average molecular weight of cellulose ester can be measured by the following method.

(Measurement of Molecular weight)

The molecular weight is measured by a high performance liquid chromatography.

Measuring requirements are listed:

Apparatus: HLC-8220 (Manufactured by Toso Corp.)
Column: TSK Super HM-M (ϕ 6.0 mm x 150 mm)
TSK Guardcolumn H-H (ϕ 4.6 mm x 35 mm)
Solvent: Tetrahydrofuran
Flow rate: 0.6 ml/min
Temperature: 40 °C
Sample concentration: 0.1% by weight
Calibration curve: Thirteen samples of Standard polystyrene STK Standard (Manufactured by Polymer Laboratories), the Mw being in the range of 1,000,000 - 500. Thirteen samples are used almost same interval.

The cellulose which is the raw material for the cellulose ester of the invention may be wood pulp or cotton linter, and the wood pulp may be that of a needle-leaf tree or a broad-leaf tree, but that of the broad-leaf tree is more preferable. Cotton linter is preferably used in view of peeling properties at the time of film formation. Cellulose esters made from these substances may be suitably blended or used alone.

For example, the proportion used of cellulose ester from cotton linter: cellulose ester from wood pulp (needle-leaf tree): cellulose ester from wood pulp (broad-leaf tree) may be 100:0:0, 90:10:0, 85:15:0, 50:50:0, 20:80:0, 10:90:0, 0:100:0, 0:0:100, 80:10:10, 85:0:15, and 40:30:30.

Further, the limiting viscosity of cellulose resins is preferably 1.5 - 1.75 g/$cm^3$, but is more preferably 1.53 - 1.63.

Still further, it is preferable that when the cellulose esters employed in the present invention are converted to a film, the resulting film produces minimal foreign matter bright spots. "Foreign matter bright spots" refers to the following

type of spots. A cellulose ester film is placed between two polarizing plates arranged at right angles (crossed Nicols) and light is exposed on one side while the other side is viewed. When foreign matter is present, light leaks through the film and a phenomenon occurs in which foreign matter particles are seen as bright spots. During this operation, the polarizing plate, which is employed for evaluation, is composed of a protective film without any foreign matter bright spots, whereby a glass plate is preferably employed to protect polarizers. It is assumed that one of the causes of foreign matter bright spots is the presence of cellulose which has undergone no acetylation or only a low degree of acetylation. It is necessary to employ cellulose esters (or employing cellulose esters exhibiting a degree of uniform substitution). Further, it is possible to remove foreign matter bright spots in such a manner that melted cellulose esters are filtered, or during either the latter half of the synthesis process of the cellulose esters, or during the process to form precipitates, a solution is temporarily prepared and is filtered via a filtration process. Since melted resins exhibit high viscosity, the latter method is more efficient.

It is likely that as the film thickness decreases, the number of foreign matter bright spots per unit area decreases, and similarly, as the content of cellulose ester incorporated in films decreases, foreign matter bright spots decreases. The number of at least 0.01 mm foreign matter bright spots is preferably at most 200, is more preferably at most 100, is still more preferably at most 50, is still more preferably at most 30, is yet more preferably at most 10, but is most preferably of course zero. The number of foreign matter bright spots of 0.005-0.01 mm is preferably at most 200, is more preferably at most 100, is still more preferably at most 50, is still more preferably at most 30, is yet more preferably at most 10, but is most preferably of course zero.

In cases in which bright spot foreign matter is removed via melt-filtration, it is preferable to filter the melted composition composed of cellulose esters, plasticizers, degradation resistant agents, and antioxidants, rather than to filter melted individual cellulose ester, whereby bright spot foreign matter is efficiently removed. Of course, bright spot foreign matter may be reduced in such a manner that during synthesis of cellulose ester, the resulting cellulose ester is dissolved in solvents and then filtered. It is possible to filter compositions which appropriately incorporate UV absorbers and other additives. The viscosity of the melt, incorporating cellulose esters, which is to be filtered, is preferably at most 10,000 P, is more preferably at most 5,000 P, is still more preferably at most 1,000 P, but is most preferably at most 500 P. Preferably employed as filters are those conventionally known, such as glass fibers, cellulose fibers, paper filters, or fluorine resins such as tetrafluoroethylene. However, ceramic and metal filters are particularly preferably employed. The absolute filtrations accuracy of employed filters is preferably at most 50 μm, is more preferably at most 30 μm, is still more preferably at most 10 μm, but is most preferably at most 5 μm. It is possible to employ them in suitable combinations. Employed as a filter, may be either a surface type or a depth type. The depth type is more preferably employed since it is relatively free from clogging.

(Incorporation method of components)

The cellulose ester of this invention preferably contains one or more additives prior to heat melting.

Incorporation of the components in the invention in the cellulose ester film does not only refer to the components being enveloped by the cellulose ester, but also refers to the components being present on both the inside and the outer surface of the cellulose ester.

The incorporation methods of the components include one in which the cellulose ester is dissolved in a solvent, and then the components are dissolved or dispersed in the resultant solution, and then the solvent is removed. Known methods are used to remove the solvent, and examples thereof include the liquid drying method, the air drying method, the solvent co-precipitation method, the freeze-drying method, and the solution casting method. The resulting mixture of the cellulose ester and the components after the removal of the solvent can be prepared so as to be in the form of fine particles, granules, pellets, a film or the like. The above incorporation of the components is performed by dissolving a solid cellulose ester as described above, but this dissolution may be performed at the same time when precipitation of cellulose ester is carried out in synthesizing the cellulose ester.

An example of the liquid drying method is one in which an aqueous solution of an active agent such as sodium lauryl sulfate is added to the solution in which the cellulose ester and the additive are dissolved and an emulsion-dispersion is performed. Next, the solvent is removed by normal pressure or reduced pressure distillation, and a dispersant of the cellulose ester containing the components is thereby obtained. In addition, centrifugal separation or decantation is preferably performed in order to remove the active agent. Various methods may be used as the emulsification method, and emulsification device using supersonic waves, high-speed rotational shearing and high pressure may be used.

A so-called batch method and continuous method both may be used in the emulsion-dispersion method using ultrasonic waves. The batch method is suitable for preparation of comparatively small amounts of sample, while the continuous method is suitable for large amounts of sample. A device such as the UH-600SR (manufactured by SMT Co., Ltd.) may be used in the continuous method. The amount of time for the irradiation of the supersonic waves can be determined by the capacity of the dispersion chamber/flow rate x circulation frequency in the case of the continuous method. The total of each irradiation time is determined in the case where there is more than one supersonic irradiation

device. The irradiation time for the supersonic waves is no more than 10,000 seconds. Also, if the irradiation time needs to be greater than 10,000 seconds, the processing load becomes large, and the actual emulsion-dispersion time must be shortened by re-selecting the emulsifying agent or the like. As a result, a time exceeding 10,000 seconds is not necessary. It is more preferable that the time is between 10 and 2,000 seconds.

A disperser mixer, a homogenizer, an ultra mixer or the like may be used as the emulsion-dispersion device which uses high-speed rotational shearing, and the viscosity of the liquid at the time of emulsion-dispersion can determine which type of device is used.

For emulsion-dispersion using high pressure, LAB 2000 (manufactured by SMT Co., Ltd.) may be used, but the emulsion-dispersion capability depends on the pressure that is applied to the sample. Pressure in the range of $10^4$ - 5 x $10^5$ kPa is preferable.

Examples of the active agent that may be used include a cation surface active agent, an anion surface active agent, an amphoteric surface active agent and a high molecular weight polymer dispersing agent. The active agent used is determined by the solvent and the particle diameter of the target emulsion.

The air drying method is one in which a spray dryer such as GS310 (manufactured by Yamato Scientific Co., Ltd.) is used, and a solution in which the cellulose ester and the components are dissolved is sprayed.

The solvent co-precipitation method is one in which a solution in which the cellulose ester and the additive are dissolved is added to a poor solvent of the cellulose ester and the additive, whereby precipitation takes place. The poor solvent is freely miscible with the solvent which dissolves the cellulose ester. The poor solvent may also be a mixed solvent. The poor solvent may also be added to a solution of the cellulose and the additive.

A precipitated composition of the cellulose ester and the additive can be separated by filtration and drying.

A particle diameter of the additive is no greater than 1 μm and preferably no greater than 500 nm, and still more preferably no greater than 200 nm in the composition of the cellulose ester and the additive. The smaller the particle size of the additive, the more even the distribution of the mechanical strength and the optical properties of the melt cast, and thus a small particle size is favorable.

It is preferable that the composition of the cellulose ester and the additive as well as additive added during heat melting are dried prior to or during heat melting. Drying herein refers to removing moisture adsorbed by any of the cellulose ester and the additive, as well as water or solvent used during preparing the mixture of the cellulose ester and additive or solvents introduced during synthesizing the additive.

The removal method may be any known drying method, and examples include the heating method, the pressure reduction method, the heating and pressure reduction method and the like, and may be performed in the air or in an inert gas environment with nitrogen selected as the inert gas. In view of film quality, it is preferable that these known drying methods are performed in a temperature range where the materials do not decompose.

For example, the amount of moisture or solvent remaining after removal in the drying step is no greater than 10 weight %, preferably no greater than 5 weight %, more preferably no greater than 1 weight %, and still more preferably no greater than 0.1 weight %, based on the total weight of materials constituting the film. The drying temperature at this time is preferably between 100°C and the Tg of the material to be dried. In view of preventing the materials from adhering to each other the drying temperature is preferably between 100°C and the (Tg-5)°C and more preferably between 110°C and the (Tg-20)°C. The drying time is preferably 0.5 - 24 hours, and more preferably 1-18 hours and still more preferably 1.5 - 12 hours. If the drying time is less than these ranges, the level of drying will be low or the drying will take too much time. Also, if the material to be dried has a Tg, if it is heated to a drying temperature that is higher than Tg, the material melts and handling is difficult.

The drying stage may be separated into 2 or more stages. For example the melt film may be prepared via storage of the material using a preliminary drying step and a pre-drying step which is performed directly before to one week before the melt layer is prepared.

(Additives)

The cellulose ester film of this invention preferably contains at least one of an ester base plasticizer having a structure of condensation of organic acid and three or more valent alcohol, an ester base plasticizer composed of a polyalcohol and a monovalent carboxylic acid, and an ester base plasticizer composed of a polyvalent carboxylic acid and a monovalent alcohol, and at least one anti-oxidant selected from phenol, hindered amine, phosphor and sulfur based compounds as additives. In addition to the compounds described above, the cellulose ester film of the invention can contain additives such as a peroxide decomposing agent, a metal inactivating agent, an ultraviolet absorbent, a matting agent, a dye or pigment, and further, may contain a plasticizer or an anti-oxidant other than those described above.

Additives can be used in the cellulose ester film which restraint generation of volatiles due to decomposition or deterioration of the film such as coloration or molecular weight reduction, and provides functions such as water-vapor permeability and lubricity, including anti-oxidation, trap of oxygen occurring due to decomposition or restraining of decomposition due to radicals generated on light exposure or heating or due to unknown causes in cellulose ester.

When the cellulose ester composition is heated and molten, decomposition reaction is activated. This decomposition reaction may deteriorate the strength of the component materials resulting from coloring or reduction in the molecular weight in some cases. Further, unwanted volatile components may be produced by the decomposition reaction of the cellulose ester composition.

When the cellulose ester composition is heated and molten, the presence of the aforementioned additives is advantageous in that the deterioration of the strength due to the material deterioration or decomposition can be reduced, or the strength inherent to the material can be maintained. Presence of the aforementioned additives is essential to produce the cellulose ester film of the present invention.

The presence of the additive is advantageous in that generation of a colored object in the visible light area is reduced at the time of heating and melting, or the disadvantageous performance of the optical film in the transmittance or haze value resulting from the entry of a volatile component into the film can be reduced or eliminated.

A particular advantage is found in that coloring or haze value can be minimized by the arrangement of the present invention. Use of the cellulose ester film of the present invention reduces the haze value to less than 1%, more preferably less than 0.5%.

It is that deterioration of the strength of the film component is restrained or strength of the inherent material can be maintained during a process endowing retardation in the film preparation. This is because that there is possibility that film may be torn during stretching process and retardation cannot be controlled when the film becomes fragile by marked deterioration of the component.

In the storage or film making step of the cellulose ester composition, deterioration reaction may be caused due to oxygen in the air. In this case, the function of stabilization of the aforementioned additive and the effect of reducing the concentration of oxygen in the air can be used in combination when embodying the present invention. Use of nitrogen or argon as an inert gas, deaeration operation by depressurization and evacuation, and operation in an enclosed environment can be mentioned as conventionally known techniques. At least one of these three techniques can be used in combination with the method of allowing the aforementioned additive to be present. The deterioration of the material can be reduced by reducing the probability of the cellulose ester composition coming into contact with oxygen in the air. This is preferred to achieve the object of the present invention.

The cellulose ester film of the present invention preferably contains 1 - 25 weight % of an ester compound, as a plasticizer, having a structure obtained by condensing the organic acid represented by Formula (1) and a polyalcohol having a valence of trivalent or more. When the amount of the plasticizer is less than 1 weight %, the effect of the addition of the plasticizer cannot be obtained, while, when the amount of the plasticizer is more than 25 weight %, bleeding tends to occur, resulting in loss of long term stability of the film. More preferably is a cellulose ester film containing 3 - 20 weight % of plasticizer, and still more preferably is a cellulose ester film containing 5 - 15 weight % of plasticizer.

Formula (1)

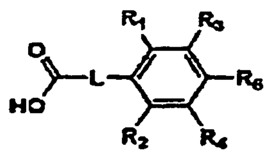

A plasticizer, as described herein, commonly refers to an additive which decreases brittleness and results in enhanced flexibility upon being incorporated in a polymer. In the present invention, a plasticizer is added so that the melting temperature of a cellulose ester resin is lowered, and at the same temperature, the melt viscosity of the film forming materials including a plasticizer is lower than the melt viscosity of a cellulose ester resin containing no additive. Further, addition is performed to enhance hydrophilicity of cellulose ester so that the water vapor permeability of cellulose ester films is lowered. Therefore, the plasticizers of the present invention have a property of an anti-moisture-permeation agent.

The melting temperature of a film forming material, as described herein, refers to the temperature at which the above materials are heated to exhibit a state of fluidity. In order that cellulose ester results in melt fluidity, it is necessary to heat cellulose ester to a temperature which is at least higher than the glass transition temperature. At or above the glass transition temperature, the elastic modulus or viscosity decreases due to heat absorption, whereby fluidity is observed. However, at higher temperatures, cellulose ester melts and simultaneously undergoes thermal decomposition to result in a decrease in the molecular weight of the cellulose ester, whereby the dynamical characteristics of the resulting film may be adversely affected. Consequently, it is preferable to melt cellulose ester at a temperature as low as possible. Lowering the melting temperature of the film forming materials is achieved by the addition of a plasticizer

having a melting point or a glass transition temperature lower than the glass transition temperature of the cellulose ester. The polyalcohol ester plasticizer employed in the present invention having a structure obtained by condensing an organic acid represented by Formula (1) and a polyalcohol has the following excellent properties, namely, lowering the melting temperature of the cellulose ester, being suitable for processing due to the lower volatility during or after the film forming process, and exhibiting excellent optical property, dimensional stability and flatness of the obtained cellulose ester film.

In above Formula (1), $R_1$ - $R_5$ each independently represent a hydrogen atom, a cycloalkyl group, an aralkyl group, an alkoxy group, a cycloalkoxy group, an aryloxy group, an aralkyloxy group, an acyl group, a carbonyloxy group, an oxycarbonyl group, or an oxycarbonyloxy group, any of which may further be substituted, provided that at least one of $R_1$ - $R_5$ is not a hydrogen atom. L represents a linkage group, which includes a substituted or unsubstituted alkylene group, an oxygen atom or a direct bond.

Preferred as the cycloalkyl group represented by $R_1$ - $R_5$ is a cycloalkyl group having 3 - 8 carbon atoms, and specific examples include cyclopropyl, cyclopentyl and cyclohexyl groups. These groups may be substituted. Examples of preferred substituents include: halogen atoms such as a chlorine atom, a bromine atom and a fluorine atom, a hydroxyl group, an alkyl group, an alkoxy group, an aralkyl group (the phenyl group may further be substituted with an alkyl group or a halogen atom), an alkenyl group such as a vinyl group or an allyl group, a phenyl group (the phenyl group may further be substituted with an alkyl group, or a halogen atom), a phenoxy group (the phenyl group may further be substituted with an alkyl group or a halogen atom), an acyl group having 2 - 8 carbon atoms such as an acetyl group or a propionyl group, and a non-substituted carbonyloxy group having 2 - 8 carbon atoms such as an acetyloxy group and a propionyloxy group.

The aralkyl group represented by $R_1$ - $R_5$ includes a benzyl group, a phenetyl group, and a $\gamma$-phenylpropyl group, which may be substituted. Listed as the preferred substituents may be those which may substitute the above cycloalkyl group.

The alkoxy group represented by $R_1$ - $R_5$ includes an alkoxy group having 1 - 8 carbon atoms. The specific examples include a methoxy group, an ethoxy group, an n-propoxy group, an n-butoxy group, an n-octyloxy group, an isopropoxy group, an isobutoxy group, a 2-ethylhexyloxy group and a t-butoxy group. The above groups may further be substituted. Examples of preferred substituents include: halogen atoms such as a chlorine atom, a bromine atom and a fluorine atom; a hydroxyl group; an alkoxy group; a cycloalkoxy group; an aralkyl group (the phenyl group may be substituted with an alkyl group or a halogen atom); an alkenyl group; a phenyl group (the phenyl group may further be substituted with an alkyl group or a halogen atom); an aryloxy group, for example, a phenoxy group (the phenyl group may further be substituted with an alkyl group or a halogen atom); an acyl group having 2 - 8 carbon atoms such as an acetyl group or a propionyl group; an acyloxy group such as a propionyloxy group; and an arylcarbonyloxy group such as a benzoyloxy group.

The cycloalkoxy groups represented by $R_1$ - $R_5$ include a cycloalkoxy group having 1 - 8 carbon atoms as an unsubstituted cycloalkoxy group. Specific examples include a cyclopropyloxy group, a cyclopentyloxy group and a cyclohexyloxy group. These groups may further be substituted. The preferred substituents may be those which may substitute the above cycloalkyl group.

The aryloxy groups represented by $R_1$ - $R_5$ include a phenoxy group, the phenyl group of which may further be substituted with the substituent listed as a substituent such as an alkyl group or a halogen atom which may substitute the above cycloalkyl group.

The aralkyloxy group represented by $R_1$ - $R_5$ includes a benzyloxy group and a phenetyloxy group, which may further be substituted. The preferred substituents may be those which may substitute the above cycloalkyl group.

The acyl group represented by $R_1$ - $R_5$ includes an unsubstituted acyl group having 2 - 8 carbon atoms such as an acetyl group and a propionyl group (an alkyl, alkenyl, or alkynyl group is included as a hydrocarbon group of the acyl group), which may further be substituted. The preferred substituents may be those which may substitute the above cycloalkyl group.

The carbonyloxy group represented by $R_1$ - $R_5$ includes an unsubstituted acyloxy group (an alkyl, alkenyl, or alkynyl group is included as a hydrocarbon group of the acyl group) having 2 - 8 carbon atoms such as an acetyloxy group or a propionyloxy group, and an arylcarbonyloxy group such as a benzoyloxy group, which may further be substituted with the group which may substitute the above cycloalkyl group.

The oxycarbonyl group represented by $R_1$ - $R_5$ includes an alkoxycarbonyl group such as a methoxycarbonyl group, an ethoxycarbonyl group or a propyloxycarbonyl group, and an aryloxycarbonyl group such as a phenoxycarbonyl group, which may further be substituted. The preferred substituents may be those which may substitute the above cycloalkyl group.

The oxycarbonyloxy group represented by $R_1$ - $R_5$ includes an alkoxycarbonyloxy group having 1 - 8 carbon atoms such as a methoxycarbonyloxy group, which may further be substituted. The preferred substituents may be those which may substitute the above cycloalkyl group.

Among these $R_1$ - $R_5$, at least one of $R_1$ - $R_5$ is not a hydrogen atom. Further, any of $R_1$ - $R_5$ may be combined with each other to form a ring structure.

Further, the linkage group represented by L includes a substituted or unsubstituted alkylene group, an oxygen atom, or a direct bond. The alkylene group includes a methylene group, an ethylene group, and a propylene group, which may further be substituted with the substituent which is listed as the substituent which may substitute the groups represented by above $R_1$ - $R_5$.

Of these, one which is particularly preferred as the linking group represented by L is the direct bond, which forms an aromatic carboxylic acid.

In the organic acid represented by Formula (1), which constitutes an ester compound to be used as a plasticizer in the present invention, at least one of $R_1$ and $R_2$ is preferably the above mentioned alkoxy group, acyl group, oxycarbonyl group, carbonyloxy group or oxycarbonyloxy group. Further, the organic acids represented by above Formula (1) may contain a plurality of substituents.

In the present invention, the organic acids which substitute the hydroxyl groups of a polyalcohol having a valence of trivalent or more may either be of a single kind or of a plurality of kinds.

In the present invention, the polyalcohol of trivalent or more which reacts with the organic acid represented by above Formula (1) to form a polyalcohol ester is preferably an aliphatic polyalcohol having a valence of 3 - 20. In the present invention, preferable polyalcohol having a valence of trivalent or more is represented by following Formula (3).

Formula (3) R'-(OH)m

wherein R' represents an m-valent aliphatic organic group, m represents an integer of 3 or more, and OH is an alcoholic hydroxy group. Particularly preferable are polyhydric alcohol having m of 3 or 4.

The following examples of a polyalcohol are cited, however, the present invention is not limited thereto. Examples of the preferred polyalcohol include: adonitol, arabitol, 1,2,4-butanetriol, 1,2,3-hexanetriol, 1,2,6-hexanetriol, glycerin, diglycerin, erythritol, pentaerythritol, dipentaerythritol, tripentaerythritol, galactitol, glucose, cellobiose, inositol, mannitol, 3-methylpentane-1,3,5-triol, pinacol, sorbitol, trimethylolpropane, trimethylolethane, and xylitol. Of these, specifically preferable are glycerin, trimethylolethane, trimethylolpropane, and pentaerythritol.

An ester of an organic acid represented by Formula (1) and a polyalcohol having a valence of trivalent or more can be synthesized employing methods known in the art. Typical synthesis examples are shown in the examples. Examples of the synthetic method include: a method in which an organic acid represented by Formula (1) and a polyalcohol undergo etherification via condensation in the presence of, for example, an acid; a method in which an organic acid is converted to an acid chloride or an acid anhydride which is allowed to react with a polyalcohol; and a method in which a phenyl ester of an organic acid is allowed to react with a polyalcohol. Depending on the targeted ester compound, it is preferable to select an appropriate method which results in a high yield.

As an example of a plasticizer containing an ester of an organic acid represented by Formula (1) and a polyalcohol having a valence of trivalent or more, the compound represented by Formula (2) is preferably cited.

Formula (2)

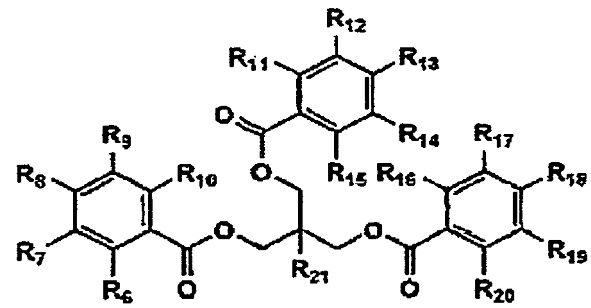

In Formula (2), $R_6$ to $R_{20}$ each independently represent a hydrogen atom, a cycloalkyl group, an aralkyl group, an alkoxy group, a cycloalkoxy group, an aryloxy group, an aralkyloxy group, an acyl group, a carbonyloxyl group, an oxycarbonyl group or an oxycarbonyloxy group, provided that $R_6$ to $R_{20}$ may further have a substituent. At least on of $R_6$ to $R_{10}$ is not a hydrogen atom, at least on of $R_{11}$ to $R_{15}$ is not a hydrogen atom, and at least on of $R_{16}$ to $R_{20}$ is not a hydrogen atom. $R_{21}$ represents an alkyl group.

As examples of the above described cycloalkyl group, aralkyl group, alkoxy group, cycloalkoxy group, aryloxy group, aralkyloxy group, acyl group, carbonyloxyl group, oxycarbonyl group and oxycarbonyloxy group represented by $R_6$ to $R_{21}$, the same groups as described for abovementioned $R_1$ to $R_5$ can be cited.

The molecular weight of the polyalcohol esters prepared as above is not specifically limited, but is preferably 300 - 1,500, more preferably 400 - 1,000. A greater molecular weight is preferred due to reduced volatility, while a smaller

molecular weight is preferred in view of reducing water vapor permeability and improving the compatibility with cellulose ester.

Specific compounds of polyalcohol esters according to the present invention will be exemplified below.

1

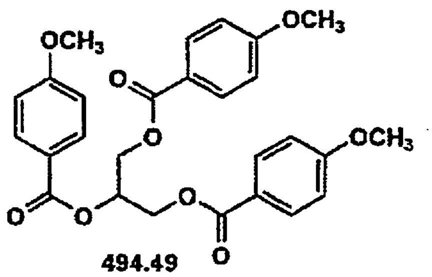

494.49

2

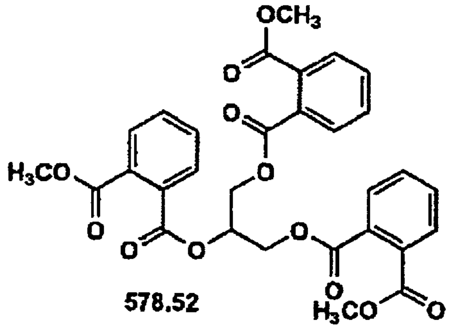

578.52

3

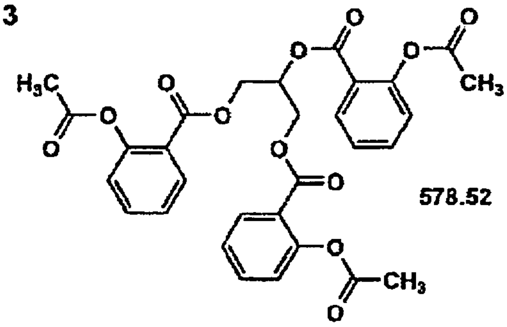

578.52

4

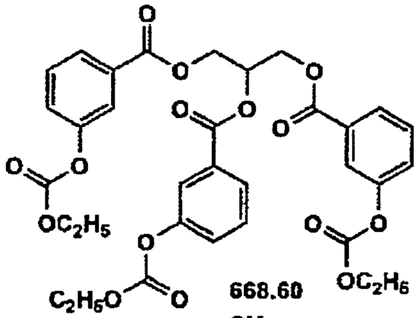

668.60

5

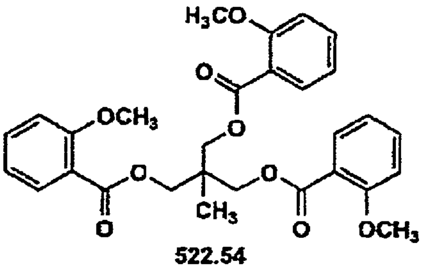

522.54

6

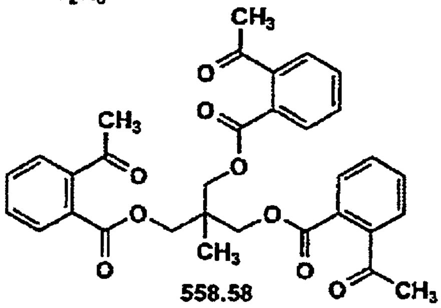

558.58

7

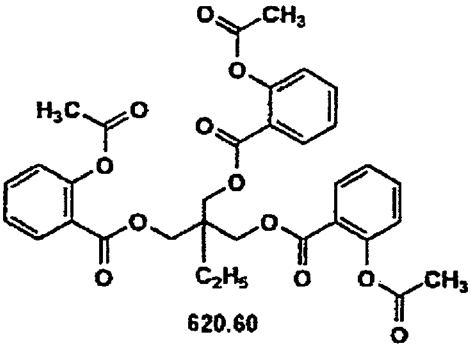

620.60

8

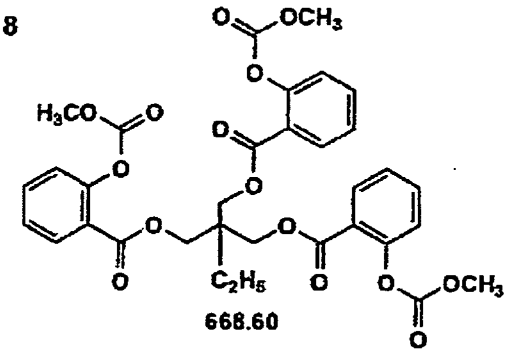

668.60

9

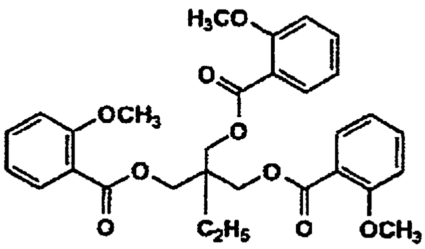

536.57

10

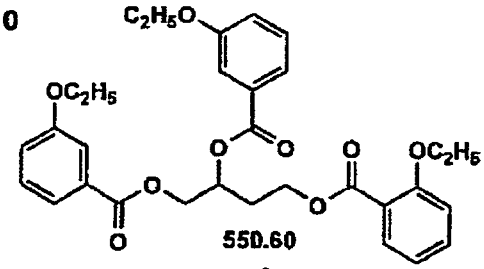

550.60

11

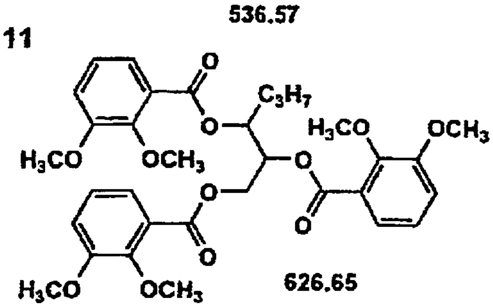

626.65

12

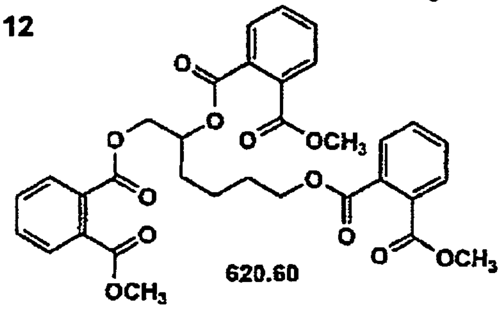

620.60

13

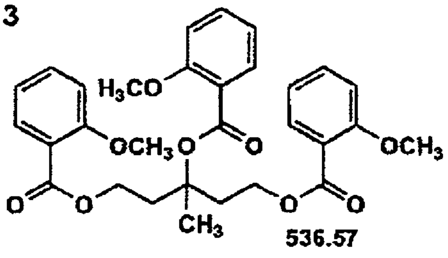

536.57

14

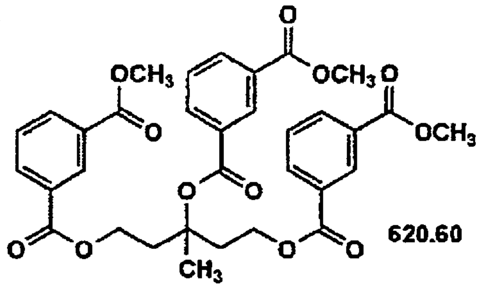

620.60

15

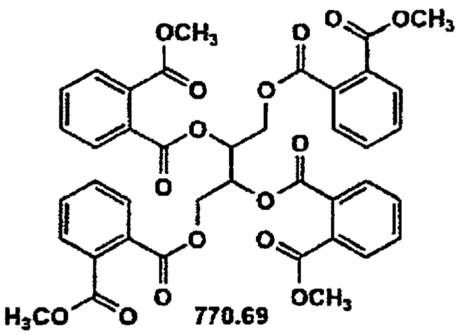

770.69

16

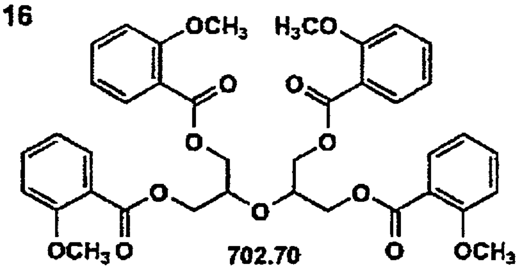

702.70

17

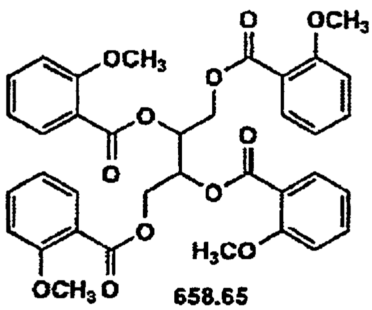

658.65

18

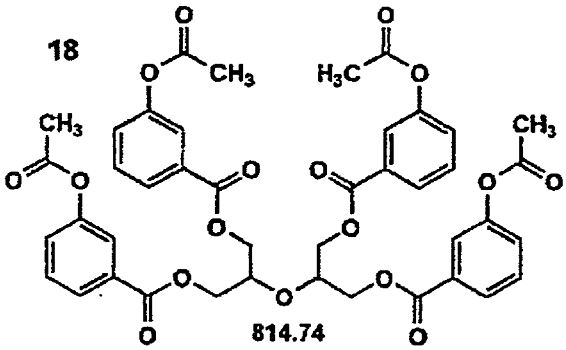

814.74

19

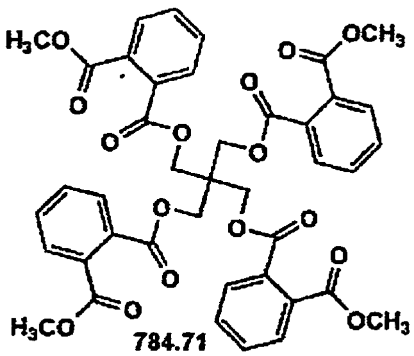

784.71

20

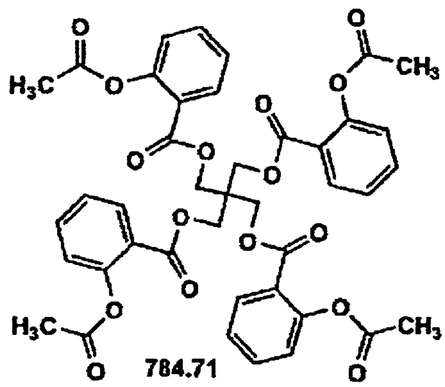

784.71

**21**

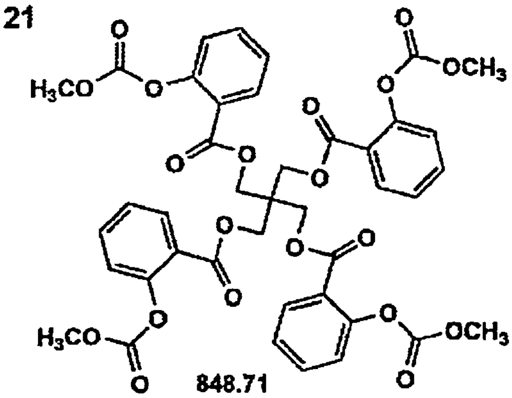

848.71

**22**

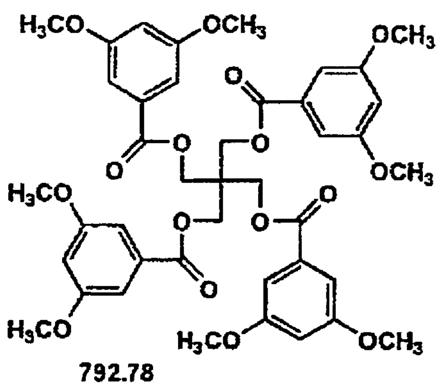

792.78

**23**

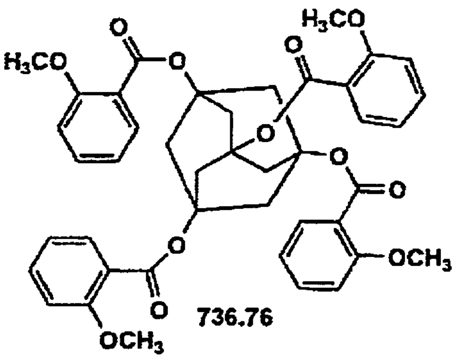

736.76

**24**

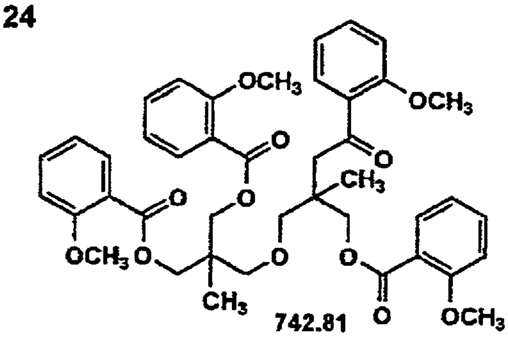

742.81

**25**

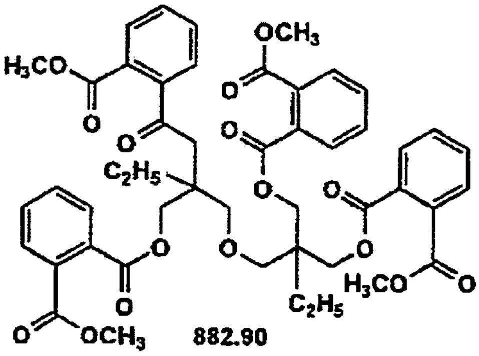

882.90

**26**

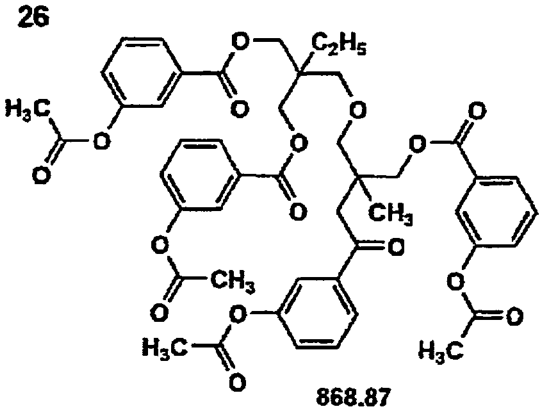

868.87

27

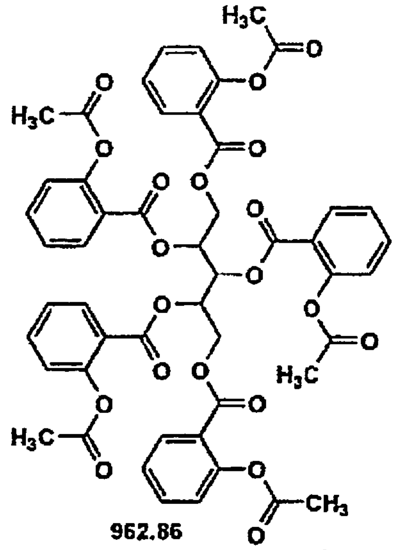

962.86

28

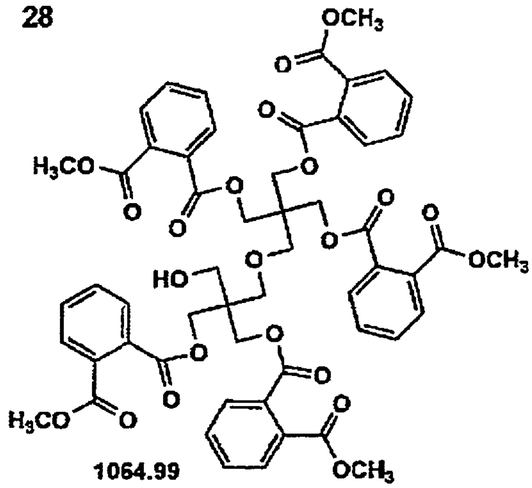

1064.99

29

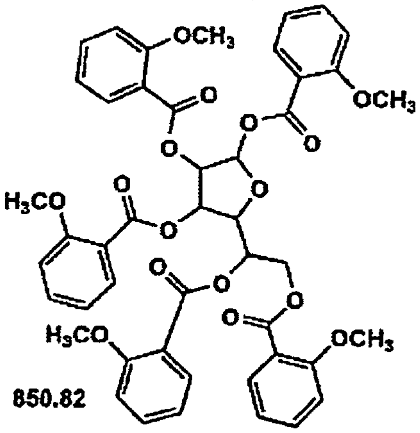

850.82

30

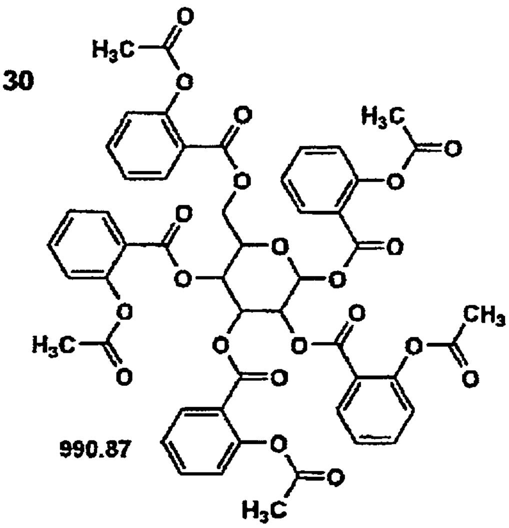

990.87

31

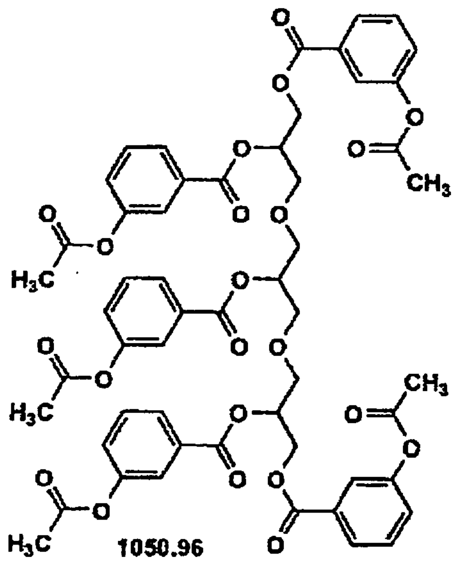

1050.96

32

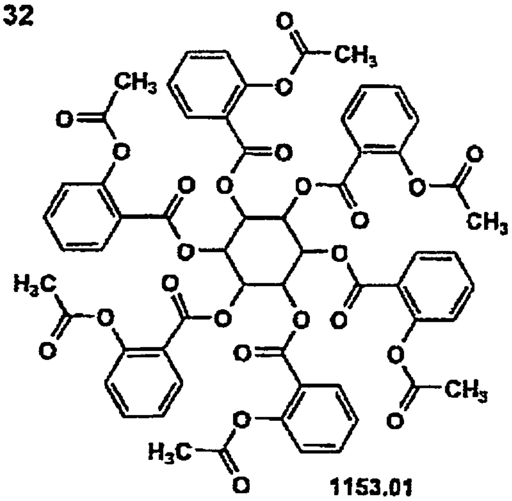

1153.01

33

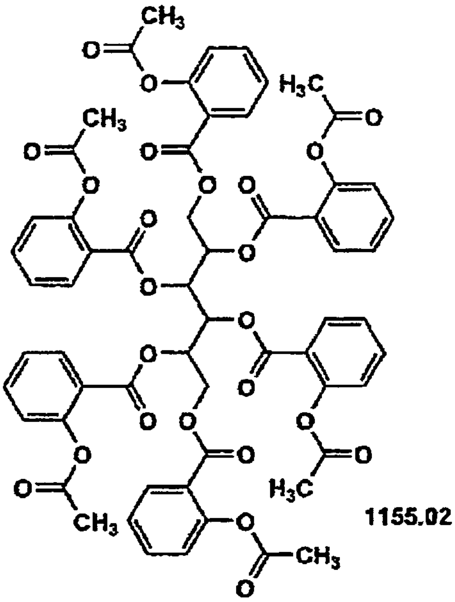

1155.02

34

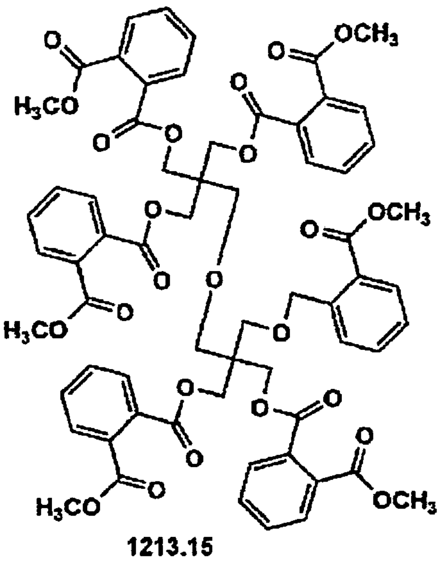

1213.15

35

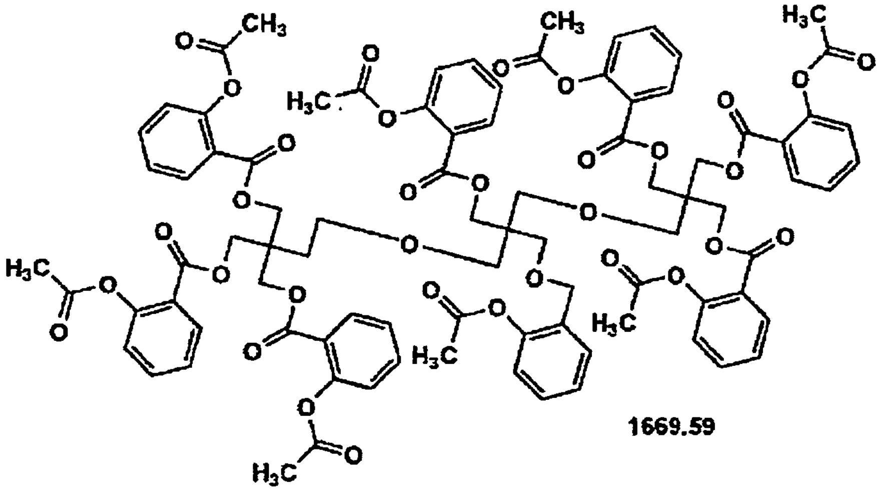

1669.59

36

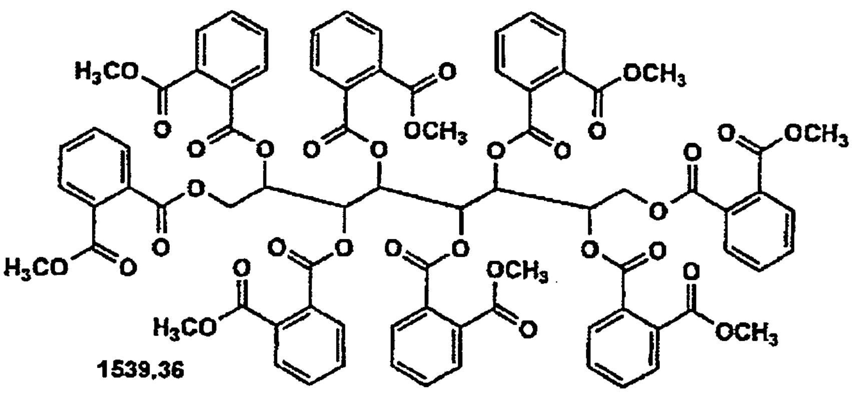

1539.36

37

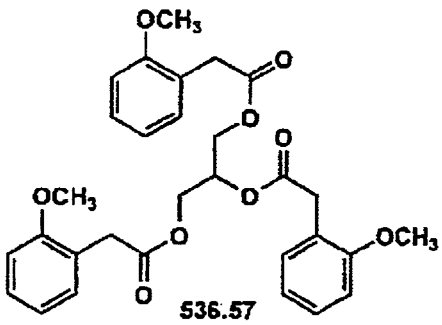

536.57

38

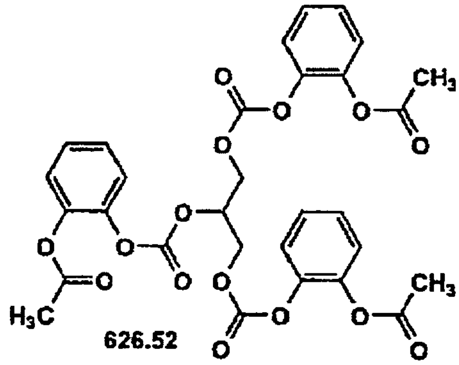

626.52

39

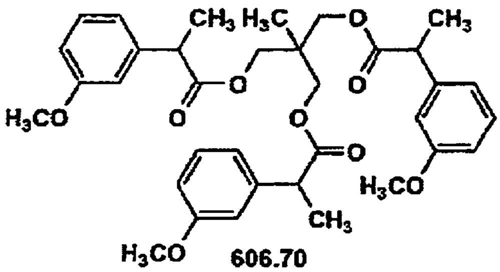

606.70

40

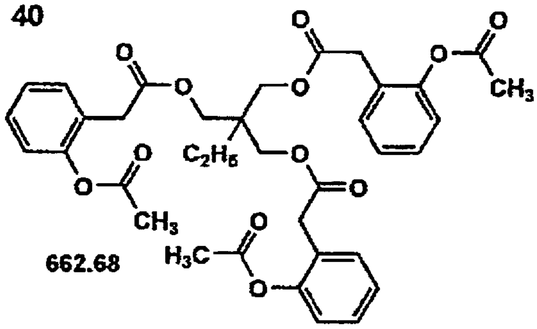

662.68

41

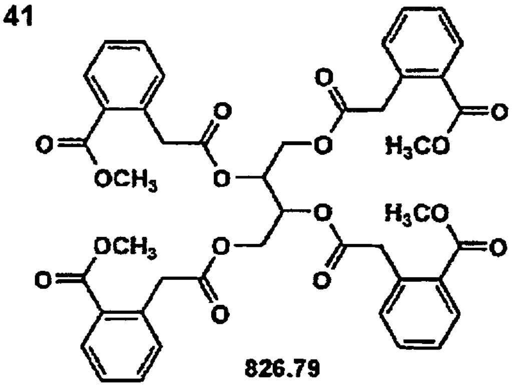

826.79

42

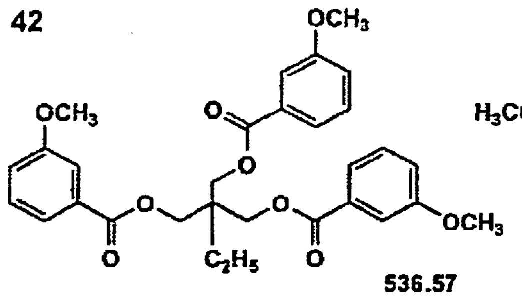

536.57

43

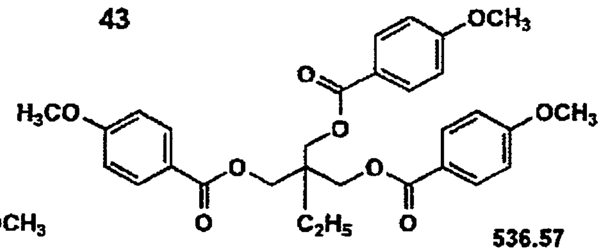

536.57

44

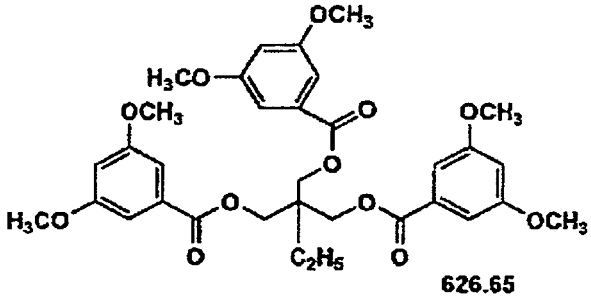

626.65

45

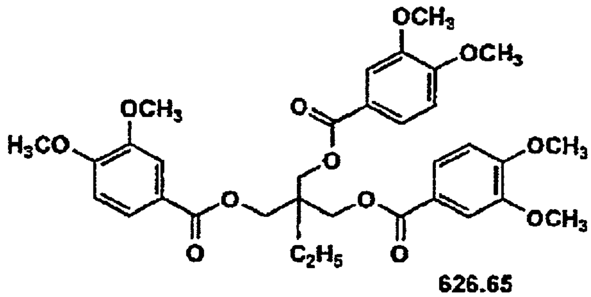

626.65

46

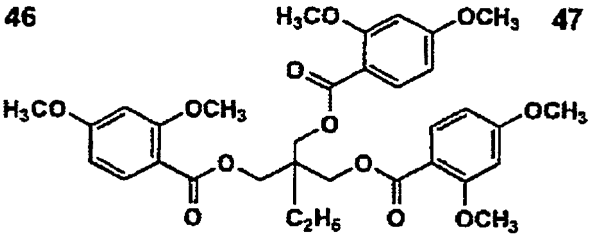

626.65

47

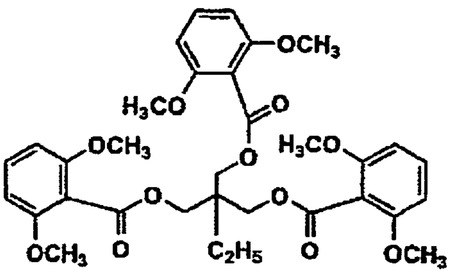

626.65

48

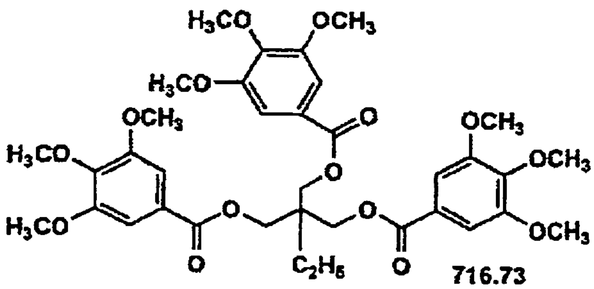

716.73

49

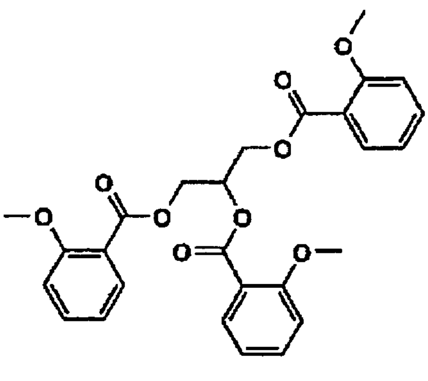

494.49

50

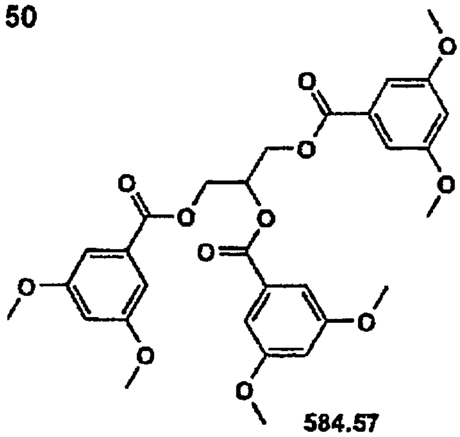

584.57

51

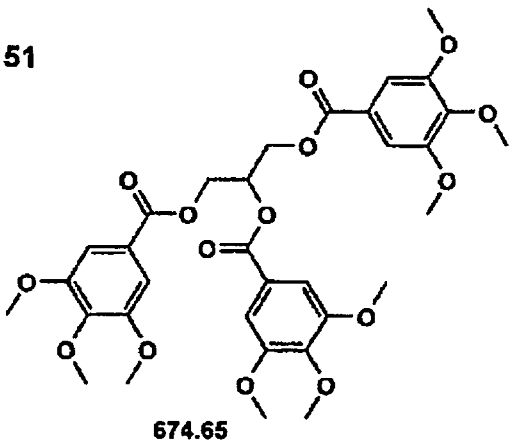

674.65

52

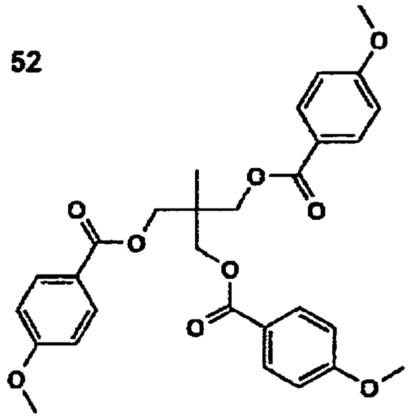

522.54

53

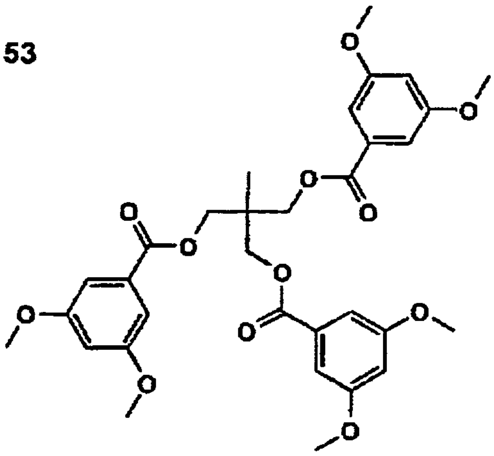

612.62

54

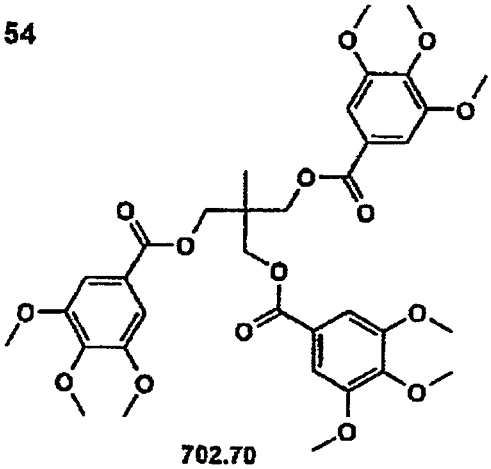

702.70

55

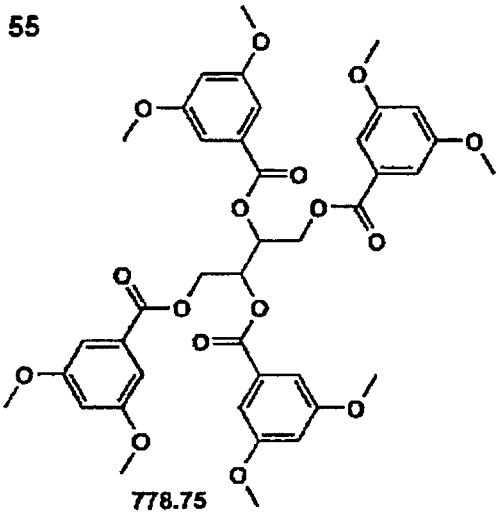

778.75

56

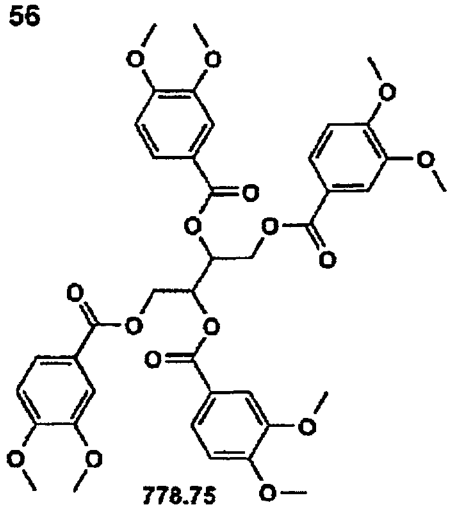

778.75

57

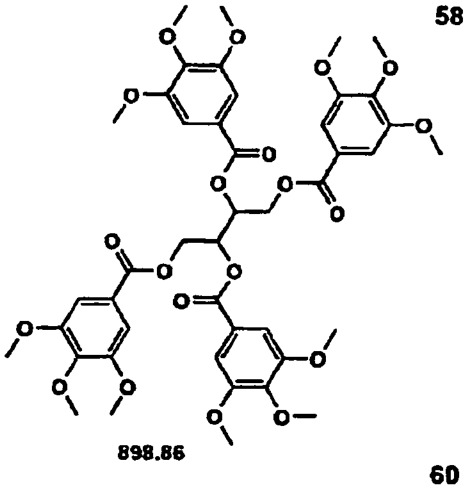

898.86

58

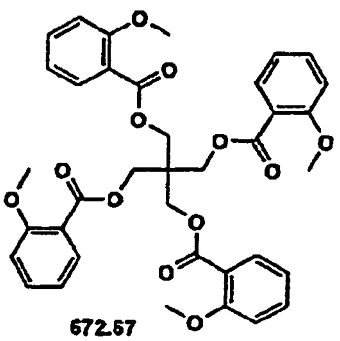

672.67

59

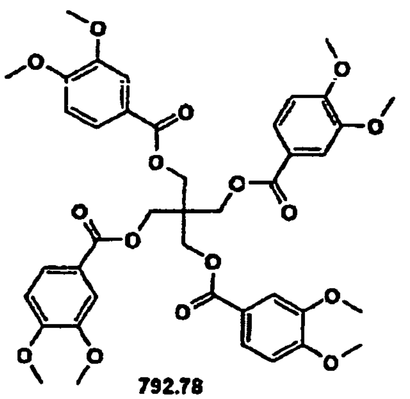

792.78

60

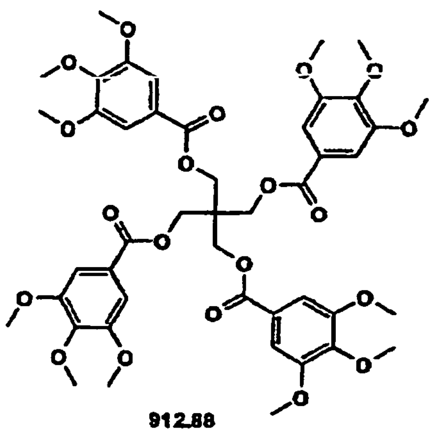

912.88

The ester compound containing an ester of an organic acid represented by Formula (1) and a polyalcohol having a valence of trivalent or more, which is preferably used as a plasticizer in the present invention, exhibits excellent compatibility with cellulose ester and thus a high amount of addition is possible. Accordingly, bleeding out tends not to occur when used together with another plasticizer or additive, whereby another plasticizer or additive can be used without any problem.

It is preferred that the plasticizer represented by formula (1) is contained at least 50 % by weight based on the whole amount of plasticizer. More preferable is 70 % or more and further preferably 80 % or more. An advantage such as improving flatness of the cellulose ester film at the melt-casting process can be obtained when the other plasticizer is used in such range.

The other preferable plasticizer is listed below.

(Ester plasticizer prepared from a polyalcohol and a monocarboxylic acid)

An ester plasticizer prepared from a polyalcohol and a monocarboxylic acid or from a polycarboxylic acid and a monoalcohol is preferable because of its high compatibility with cellulose acetate.

Examples of an ethylene glycol ester based plasticizer, which is one of polyhydric alcohol ester based plasticizers, include ethylene glycol alkyl ester based plasticizers such as ethylene glycol acetate, ethylene glycol butyrate and the like; ethylene glycol dicycloalkyl ester based plasticizers such as ethylene glycol dicyclopropyl carboxylate and ethylene glycol dicyclohexyl carboxylate; and ethylene glycol aryl ester based plasticizers such as ethylene glycol dibenzoate and ethylene glycol di-4-methyl benzoate. These alkylate groups, cycloalkylate groups and arylate groups may be the same or different and may further be substituted. The substituent groups may be a mixture of alkylate groups, cycloalkylate groups and arylate groups, and the substituent groups may be bonded to each other by covalent linkage. The ethylene glycol portions may be substituted. Further, a part of the ethylene glycol ester structure may be part of a polymer or may be systematically included in a polymer side chain as a pendant. It may also be introduced into a part of the molecular structure of additives such as an antioxidant, an acid scavenger, and an ultraviolet absorbent.

Examples of a glycerin ester based plasticizer, which is one of the polyhydric alcohol ester based plasticizers, include glycerin alky esters such as triacetin, tributyrin, glycerin diacetate carboxylate, and glycerin oleate propionate;

glycerin cycloalkyl esters such as glycerin tricyclopropyl carboxylate, and glycerin tricyclohexyl carboxylate; glycerin aryl esters such as glycerin tribenzoate, and glycerin 4-methylbenzoate; diglycerin alkyl esters such as diglycerin tetraacetylate, diglycerin tetrapropionate, diglycerin acetate tricarboxylate, and diglycerin tetralaurate; diglycerin cycloalkyl esters such as diglycerin tetracyclobutyl carboxylate, and diglycerin tetracyclopentyl carboxylate; and diglycerin aryl esters such as diglycerin tetrabenzoate, and diglycerin 3-methyl benzoate. These alkylate groups, cycloalkyl carboxylate groups and arylate groups may be same or different and may further be substituted. The substituent groups may be a mixture of the alkylate groups, cycloalkyl carboxylate groups and arylate groups, and the substituent groups may be bonded to each other by covalent bonds. Further, the glycerin and diglycerin portions may be substituted. Further, a part of the glycerin and diglycerin ester structure may be part of a polymer or may be systematically included in a polymer side chain as a pendant. It may also be introduced into a part of the molecular structure of additives such as an antioxidant, an acid scavenger, and an ultraviolet absorbent.

Examples of other polyhydric alcohol ester based plasticizers are given in JP-A 2003-12823 from paragraphs 30 - 33.

These alkylate groups, cycloalkyl carboxylate groups and arylate groups may be same or different and may further be substituted. The substituent groups may be a mixture of the alkylate groups, cycloalkyl carboxylate groups and arylate groups, and the substituent groups may be bonded to each other by covalent bonds. Further, the polyvalent alcohol portions may be substituted. Further, a part of the polyvalent alcohol structure may be part of a polymer or may be systematically included regularly repeatedly in a polymer side chain as a pendant. It may also be introduced into a part of the molecular structure of additives such as an antioxidant, an acid scavenger, and an ultraviolet absorbent.

Of the ester based plasticizers formed from a polyhydric alcohol and a monocarboxylic acid, alkyl polyhydric alcohol aryl esters are preferable, and examples thereof include ethylene glycol benzoate, glycerin tribenzoate, diglycerin tetrabenzoate and exemplified compound 16, which is given as an example in paragraph 32 of JP-A 2003-12823.

Dicarboxylic acid ester plasticizer which is one of the polycarboxylic acid esters: Specific examples of a dicarboxylic acid ester plasticizer include: alkyl dicarboxylic acid cycloalkyl ester plasticizers such as didodecyl malonate(C1), dioctyl adipate(C4) and dibutyl sebacate(C8); alkyl dicarboxylic acid cycloalkyl ester plasticizers such as dicyclopentyl succinate and dicyclohexyl adipate; alkyl dicarboxylic acid aryl ester plasticizers such as diphenyl succinate and di-4-methyl phenyl glutarate; cycloalkyl dicarboxylic acid alkyl ester plasticizers such as dihexyl-1, 4-cyclohexane dicarboxylate and didecyl bicyclo [2.2.1] heptane-2,3-dicarboxylate; cycloalkyl dicarboxylic acid cycloalkyl ester plasticizers such as dicyclohexyl-1, 2-cyclobutane dicarboxylate and dicyclopropyl-1, 2-cyclohexyl dicarboxylate; cycloalkyl dicarboxylic acid aryl ester plasticizers such as diphenyl-1,1-cyclopropyl dicarboxylate and di-2-naphthyl-1,4-cyclohexane dicarboxylate; aryl dicarboxylic acid alkyl ester plasticizers such as diethyl phthalate, dimethyl phthalate, dioctyl phthalate, dibutyl phthalate and di-2-ethylhexyl phthalate; aryl dicarboxylic acid cycloalkyl ester plasticizers such as dicyclopropyl phthalate and dicyclohexyl phthalate; and aryl dicarboxylic acid aryl ester plasticizers such as diphenyl phthalate and di-4-methylphenyl phthalate. These alkoxy groups and cycloalkoxy groups may be the same or different, and may also be monosubstituted and the substitution groups may be further substituted. The alkyl groups and the cycloalkyl groups may be mixed, and the substituent groups may be bonded to each other via covalent bond. Furthermore, the aromatic ring of the phthalic acid may be substituted and may be a multimer such as a dimer, a trimer or a tetramer. The phthalic acid ester part of the structure may be a part of the polymer or may be systematically included as a pendant. It may also be introduced into a part of the molecular structure of the additives such as an antioxidant, an acid scavenger and an ultraviolet light absorber.

Other polycarboxylic acid ester plasticizers: Specific examples of polyhydric carboxylic acid ester plasticizers include: alkyl polycarboxylic acid alkyl ester plasticizers such as tridodecyl tricarbalate and tributyl-meso-butane-1,2,3,4,-tetracarboxylate; alkyl polyhydric carboxylic acid cycloalkyl ester plasticizers such as tricyclohexyl tricarbalate and tricyclopopyl-2-hydroxy-1,2,3-propane tricarboxylate; alkyl polyhydric carboxylic acid aryl ester plasticizers such as triphenyl-2-hydroxyl-1,2,3-propane tricarboxylate, tetra-3-methylphenyl tetrahydrofuran-2,3,4,5-tetracarboxylate; cycloalkyl polyhydric carboxylic acid alkyl ester plasticizers such as tetrahexyl-1,2,3,4- cyclobutane tetracarboxylate and tetrabutyl-1,2,3,4,-dicyclopentane tetracarboxylate; cycloalkyl polyhydric carboxylic acid cycloalkyl ester plasticizers such as tetracyclopropyl-1,2,3,4-cyclobutane tetracarboxylate and tricyclohexyl-1,3,5-cyclohexyl tricarboxylate; cycloalkyl polyhydric carboxylic acid aryl ester plasticizers such as triphenyl-1,3,5-cyclohexyl tricarboxylate, hexa-4-methylphenyl-1,2,3,4,5,6-cyclohexyl hexacarboxylate; aryl polyhydric carboxylic acid alkyl ester based plasticizers such as tridodecyl benzene-1,2,4-tricarboxylate and tetraoctylbenzene-1,2,4,5-tetracarboxylate; aryl polyhydric carboxylic acid cycloalkyl ester plasticizers such as tricyclopentyl benzene-1,3,5-tricarboxylate and tetracyclohexyl benzene-1,2,3,5 tetracarboxylate; and aryl polyhydric carboxylic acid aryl ester plasticizers such as triphenyl benzene-1,3,5-tetracarboxylate and hexa-4-methylphenyl benzene-1,2,3,4,5,6-hexacarboxylate. These alkoxy groups and cycloalkoxy groups may be the same or different, and may also be substituted and the substitution groups may be further substituted. The alkyl groups and the cycloalkyl groups may be mixed, and the substituent groups may be bonded to each other by common bonds. Furthermore, the aromatic ring of the phthalic acid may be substituted and may be a multimer such as a dimer, trimer, tetramer and the like. The phthalic acid ester part of the structure may be a part of the polymer or may be

systematically included as a pendant. It may also be introduced into a part of the molecular structure of the additive such as an antioxidant, an acid scavenger and an ultraviolet light absorber.

Among the above ester plasticizer derived from a polycarboxylic acid and a monoalcohol, a dialkylcarboxylic acid alkyl ester is preferable, specifically, abovementioned dioctyladipate and tridecyltricarbalate are cited.

(Other plasticizers)

Other plasticizers that can be also used in the invention include phosphoric acid ester plasticizers, polymer plasticizers and the like.

Examples of the phosphoric acid ester plasticizer include phosphoric acid alkyl esters such as triacetyl phosphate, tributyl phosphate and the like, phosphoric acid cycloalkyl esters such as tricyclopentyl phosphate, cyclohexyl phosphate and the like, phosphoric acid aryl esters such as triphenyl phosphate, tricresyl phosphate, cresylphenyl phosphate, octyldiphenyl phosphate, diphenylbiphenyl phosphate, trioctyl phosphate, tributyl phosphate, trinaphthyl phosphate, triglyceryl phosphate, tris ortho-biphenyl phosphate. The substituent groups for these may be the same or different, and may be further substituted. The substituent groups may be a mixture of alkyl groups, cycloalkyl groups and aryl groups, and the substituent groups may be bonded to each other by covalent bonds.

Examples of the phosphoric acid ester also include alkylene bis (dialkyl phosphates) such as ethylene bis (dimethyl phosphate), butylene bis (diethyl phosphate) and the like, alkylene bis (diaryl phosphates such as ethylene bis (diphenyl phosphate),propylene bis (dinaphthyl phosphate) and the like, arylene bis (dialkyl phosphates) such as phenylene bis (dibutyl phosphate), biphenylene bis (dioctyl phosphate) and the like, arylene bis (diaryl phosphates) such as phenylene bis (diphenyl phosphate), naphthylene bis (ditoluyl phosphate) and the like. These substituent groups may the same or different, and may be further substituted. The substituent groups may be a mixture of an alkyl group, cycloalkyl groups and aryl groups, and the substituent groups may be bonded to each other by covalent bonds.

Further, a part of the phosphoric acid ester structure may be part of a polymer or may be systematically included in a polymer side chain as a pendant. It may also be introduced into a part of the molecular structure of additives such as an antioxidant, an acid scavenger, and an ultraviolet absorbent. Of the compounds listed above, aryl ester phosphates and arylene bis (diaryl phosphates) are preferable, and more specifically, triphenyl phosphate and phenylene bis(diphenyl phosphate) are preferable.

Polymer plasticizers: Specific examples of polymer plasticizers include: an aliphatic hydrocarbon polymer; an alicyclic hydrocarbon polymer; acrylic polymers such as poly(ethylacrylate) and poly(methylmethacrylate); vinyl polymers such as poly(vinyl isobutylether) and poly(N-vinylpyrrolidone); styrene polymers such as polystyrene and poly(4-hydroxystyrene); polyesters such as polybutylenesuccinate, polyethyleneterephthalate and polyethylenenaphthalate; polyethers such as polyethyleneoxide and polypropyleneoxide; polyamide; polyurethane; and polyurea. The number average molecular weight of a polymer plasticizer is preferably 1000 - 500,000 and specifically preferably 5,000 - 200,000. The number average molecular weight of less than 1,000 may cause a problem of volatility and that of more than 500,000 may result in lowering of plasticizing ability which may cause an unfavorable effect on the physical property of the cellulose ester film. These polymer plasticizers may be a homopolymer containing a single kind of repeat unit or a copolymer containing plural kinds of repeat units, or may contain 2 or more of the above polymers.

In the plasticizer of the present invention, it is preferable, like in the above-mentioned cellulose ester, to remove impurities of residual acid, inorganic salt, and low molecular weight organic material, which are carried from preparation process or generated during storage like as the cellulose ester mentioned above, and it is more preferable that the purity of the plasticizer is 99% or more. Each of the amounts of residual acid and water is preferably 0.01-100 ppm, whereby, in the melt-casting process of cellulose ester, heat deterioration can be reduced, and film-production stability, optical property and mechanical property of the film are improved.

(Antioxidant employed during melt-cast film preparation)

It is preferable to incorporate an antioxidant as a stabilizer in the cellulose ester film of the present invention, since decomposition of cellulose ester is accelerated not only by heat but also by oxygen at temperatures where melt-casting is carried out.

As a useful antioxidant in the present invention, a compound which restrains deterioration of the material for melt-casting due to oxygen can be utilized without limitation, however, examples of a useful compound include: a phenol compound, a hindered amine compound, a phosphorus compound, a sulfur-containing compound, a stabilizer against thermal process and an oxygen scavenger. Specifically preferable among them is a phenol compound, a hindered amine compound, or a phosphorus compound. These compounds are the same as those described as compound employed during washing cellulose ester. By blending such a compound, it is possible to prevent coloring or strength decrease of the film, while keeping the transparency or heat resistance of the film. These antioxidants each can be utilized alone or in combination of two types or more.

The total adding amount of the antioxidant is 0.01 - 10 parts by weight, preferably 0.05 - 5, and more preferably 0.1 - 5 parts by weight based on 100 parts of cellulose ester.

(Acid scavengers)

The acid scavenger is an agent that has the role of trapping the acid (proton acid) remaining in the cellulose ester that is brought in. Also when the cellulose ester is melted, the side chain hydrolysis is promoted due to water in the polymer and the heat, and in the case of CAP, acetic acid or propionic acid is formed. It is sufficient that the acid scavenger is able to chemically bond with acid, and examples include but are not limited to compounds including epoxy, tertiary amines, and ether structures.

Examples thereof include epoxy compounds, which are acid trapping agents described in U.S. Patent No. 4,137,201. The epoxy compounds which are trapping agents include those known in the technological field, and examples include polyglycols derived by condensation such as diglycidyl ethers of various polyglycols, especially those having approximately 8-40 moles of ethylene oxide per mole of polyglycol, diglycidyl ethers of glycerol and the like, metal epoxy compounds (such as those used in the past in vinyl chloride polymer compositions and those used together with vinyl chloride polymer compositions), epoxy ether condensation products, a diglycidyl ether of Bisphenol A (namely 4,4'-dihydroxydiphenyl dimethyl methane), epoxy unsaturated fatty acid esters (particularly alkyl esters having about 4 - 2 carbon atoms of fatty acids having 2 - 22 carbon atoms (such as butyl epoxy stearate) and the like, and various epoxy long-chain fatty acid triglycerides and the like (such as epoxy plant oils which are typically compositions of epoxy soy bean oil and the like and other unsaturated natural oils (these are sometimes called epoxidized natural glycerides or unsaturated fatty acids and these fatty acids generally have 12 to 22 carbon atoms)). Particularly preferable are commercially available epoxy resin compounds, which include an epoxy group such as EPON 815c, and other epoxidized ether oligomer condensates such as those represented by the general formula (4).

Formula (4)

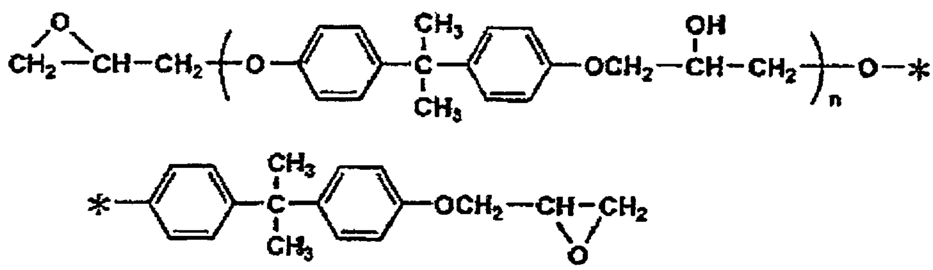

In the formula n is an integer of 0 - 12. Other examples of acid trapping agents that can be used include those described in paragraphs 87 - 105 in JP-A H05-194788.

The acid scavenger preferably removes the impurities such as residual acid, inorganic salt and organic low-molecule compound that have been carried over from the process of manufacturing, or that have occurred during preservation. More preferable is to have a purity of 99% or more. The amount of residual acid and water is preferably 0.01 through 100 ppm. This reduces thermal deterioration in the melt-casting film formation of the cellulose ester, and improves the film formation stability, the optical property and the mechanical property of the film.

An acid scavenger is also referred to as an acid capture, an acid trapping agent, an acid catcher, however, in the present invention, any of these agents are usable regardless of the difference in the address term.

(Ultraviolet absorbent)

The ultraviolet absorbent preferably has excellent ultraviolet light absorbance for wavelengths not greater than 370 nm in view of preventing deterioration of the polarizer or the display device due to ultraviolet light, and from the viewpoint of the liquid crystal display it is preferable that there is little absorbance of visible light which has wavelength of not less than 400 nm. Examples of the ultraviolet absorbents include oxybenzophenone compounds, benzotriazole compounds, salicylic acid ester compounds, benzophenone compounds, cyano acrylate compounds nickel complex compounds and the like and benzophenone compounds as well as benzotriazole compounds which have little coloration are preferable. In addition, the ultraviolet absorbents described in JP-A Nos. H10-182621 and H08-337574, and the polymer ultraviolet absorbents described in JP-A H06-148430 may also be used.

Examples of useful benzotriazole based ultraviolet absorbents include 2-(2'-hydroxy-5'-methylphenyl) benzotriazole, 2-(2'-hydroxy 3', 5'-di-tert-butyl phenyl) benzotriazole, 2-(2'-hydroxy 3'-tert-butyl-5'-methylphenyl) benzotriazole, 2-(2'-hydroxy 3', 5'-di-tert-butyl phenyl) -5-chlorobenzotriazole, 2-(2'-hydroxy 3'- (3", 4", 5", 6"-tetrahydrophthalimide methyl)-5'-methylphenyl) benzotriazole, 2,2 -methylenbis (4-(1,1,3,3,-tetramethyl butyl)-6-(2H-benzotriazole-2-yl) phenol), 2-(2'-hydroxy-3'-tert-butyl-5'-methylphenyl)-5- chlorobenzotriazole, 2-(2H-benzotriazole-2-yl)-6-(straight chain or side chain dodecyl)-4-methylphenol, mixtures of octyl-3-[3-tert-butyl-4-hydroxy-5-(chloro-2H-benzotriazole-2-yl) phenyl] propionate and 2-ethylhexyl-3-[3-tert-butyl-4-hydroxy-5-(5-chloro-2H-benzotriazole-2-yl) phenyl] propionate, and 2-(2'-hydroxy-3'-(1-methlyl-1-phenylethyl)-5'(1,1,3,3,-tetramethylbutyl)-phenyl) benzotriazole. It is not limited to these examples.

Commercially available TINUVIN 109, TINUVIN 171, and TINUVIN 360, (each being manufactured by Chiba Specialty Chemical Co., Ltd.) may be employed.

Examples of the benzophenone based compound include 2,4- hydroxy benzophenone, 2, 2' -dihydroxy-4-methoxy benzophenone, 2-hydroxy-4-methoxy-5-sulfobenzophenone, bis (2-methoxy-4-hydroxy-5-benzoyl phenyl methane) and the like, but are not limited thereto.

The amount of the ultraviolet absorbent to add in the cellulose ester film is preferably from 0.1 to 20% by weight, more preferably from 0.5 to 10% by weight, and still more preferably from 1 to 5% by weight. Two or more kinds of the ultraviolet absorbent may be used together.

«Viscosity lowering agent»

In the present invention, a hydrogen bondable solvent may be added in order to reduce a melt viscosity. The hydrogen bondable solvent means an organic solvent capable of causing "bonding" of a hydrogen atom mediation generated between electrically negative atoms (oxygen, nitrogen, fluorine, chlorine) and hydrogen covalent bonding with the electrically negative atoms, in other word, it means an organic solvent capable of arranging molecules approaching to each other with a large bonding moment and by containing a bond including hydrogen such as O-H ((oxygen hydrogen bond), N-H (nitrogen hydrogen bond) and F-H (fluorine hydrogen bond), as disclosed in the publication "intermolecular force and surface force" written by J. N. Israelachibiri (translated by Yasushi Kondo and Hiroyuki Ohshima, published by McGraw-Hill, 1991). Since the hydrogen bondable solvent has an ability to form a hydrogen bond between celluloses stronger than that between molecules of cellulose ester, the melting temperature of a cellulose ester composition can be lowered by the addition of the hydrogen bondable solvent than the glass transition temperature of a cellulose ester alone in the melting casting method conducted in the present invention. Further, the melting viscosity of a cellulose ester composition containing the hydrogen bondable solvent can be lowered than that of a cellulose ester in the same melting temperature.

Examples of the hydrogen bondable solvents include alcohol such as methanol, ethanol, propanol, isopropanol, n-butanol, sec-butanol, t-butanol, 2-ethyl hexanol, heptanol, octanol, nonanol, dodecanol, ethylene glycol, propylene glycol, hexylene glycol, dipropylene glycol, polyethylene glycol, polypropylene glycol, methyl cellosolve, ethyl cellosolve, butyl cellosolve, hexyl cellosolve, and glycerol; ketone such as acetone and methyl ethyl ketone; carboxylic acid such as formic acid, acetic acid, propionic acid, and butyric acid; ether such as diethyl ether, tetrahydrofuran, and dioxane; pyrrolidone such as N-methyl pyrrolidone; and amines such as trimethylamine and pyridine. These hydrogen bondable solvents may be used alone or a mixture of two or more kinds. Among them, alcohol, ketone, and ether are desirable, and especially, methanol, ethanol, propanol, isopropanol, octanol, dodecanol, ethylene glycol, glycerol, acetone, and tetrahydrofuran are desirable. Further, watersoluble solvents such as methanol, ethanol, propanol, isopropanol, ethylene glycol, glycerol, acetone, and tetrahydrofuran are more preferable. Here, "water soluble" means that the solubility for 100 g of water is 10 g or more.

(Matting agent)

Fine particles such as a matting agent or the like may be added to the cellulose ester film of the invention in order to impart a matting effect, and fine particles of inorganic compounds as well as fine particles of organic compounds may be used. The particles of the matting agent are preferably as fine as possible and examples of the fine particle matting agent include inorganic fine particles such as those of silicon dioxide, titanium dioxide, aluminum oxide, zirconium oxide, calcium carbonate, kaolin, talc, burned calcium silicate, hydrated calcium silicate, aluminum silicate, magnesium silicate, and calcium phosphate or crosslinked fine particles of polymers. Of these, silicon dioxide is preferable in view of reduced haze in the film. The particles such as the silicon dioxide particles are often surface treated using an organic substance, and this is preferable because it reduces haze in the film.

Examples of the organic compound preferably used in the surface treatment include halosilanes, alkoxysilanes, silazanes, and siloxanes. Particles having a larger average particle diameter have a greater matting effect, while particles having a smaller average particle diameter have excellent transparency. The secondary particles have an average particle diameter in the range of 0.05 to 1.0 μm. The secondary particles preferably have an average particle diameter

in the range of 5 to 50 nm, and more preferably 7 to 14 nm. These fine particles are preferable because they create unevenness of 0.01 to 1.0 μm in the plane of the cellulose ester film. The amount of the fine particles included in the cellulose ester is preferably 0.005 to 0.3% by weight.

Examples of the silicon dioxide particles include Aerosil 200, 200V, 300, R972, R972V, R974, R202, R812, OX50, TT600, and NAX50, each manufactured by Nippon Aerosil Co., Ltd., and KE-P12, KEP30, KE-P100, and KE-P150 each manufactured by Nippon Shokubai Co., Ltd., and of these, Aerosil 200V, R972, R972V, R974, R202, R812, NAX50, KEP30, and KE-P100 are preferred. Two or more of these matting agents may be combined and used. In the case where 2 or more matting agents are used, they may be mixed in a suitably selected proportion. In this case, matting agents which have different particle diameter and quality such as Aerosil 200V and R972V may be used in weight proportions in the range from 0.1:99.9 - 99.9:0.1

The presence of the fine particles used as the matting agent in the film can also serve another purpose of improving the strength of the film. The presence of the fine particles in the film may also improve the orientation of the cellulose ester itself, which constitutes the optical film of this invention.

(Polymer Materials)

Polymers or oligomers other than cellulose ester may be blended in an optical film. The polymers or oligomers are preferably those having excellent compatibility with the cellulose ester. Transmittance of the cellulose ester film of the invention is preferably not less than 80%, more preferably not less than 90%, and still more preferably not less than 92%. Cellulose ester in which at least one of the polymers and the oligomers is incorporated has advantages that its melt viscosity can be adjusted and physical properties of the film formed from the cellulose ester are improved. In this instance the polymer materials may be contained as the other additives mentioned above.

The cellulose ester composition in the invention, being subjected to melt extrusion, is extruded as a film from a T-type die to be in contact with a cooling drum using an electrostatic discharge method, and cooled to obtain an unstretched film to prepare an optical film. The temperature of the cooling drum is preferably maintained at 90 to 150 °C.

The melt extrusion may be performed using a uniaxial extruder, a biaxial extruder, or using a biaxial extruder which has a uniaxial extruder connected downstream thereof, but it is preferable that the uniaxial extruder is used in view of the mechanical strength and optical properties of the resulting film. Also, it is preferable that the usual ambient air supplied to the raw material tank, the raw material charge section and the extruder interior and during the melting process is replaced by an inactive gas such as nitrogen, or that the pressure of the ambient air is reduced.

The temperature during melt extrusion is ordinarily in the range of 150 to 300 °C, preferably 150 to 250 °C, and still more preferably 200 to 240 °C.

(Stretching and refractive index control)

Refractive index of the cellulose ester film of the invention can be controlled by stretching appropriately. When the stretching is performed by a factor of 1.0 to 2.0 in one direction of the cellulose ester film and by a factor of 1.01 to 2.5 in the direction in plane of the film perpendicular to that direction, the refractive index can be controlled within a desirable range.

For example, the film can be successively or simultaneously stretched in the mechanical direction and in the direction in plane normal to the mechanical direction. In this case, too small stretching magnification in at least one direction provides insufficient optical retardation, while too much stretching magnification results in rupture of the film.

For example, when the film is stretched in the casting direction, too much contraction in the transverse direction of the film provides too large a refractive index in the thickness direction of the film. In this case, improvement can be carried out by restraining the contraction in the transverse direction of the film or by stretching the film in the transverse direction. When the film is stretched in the transverse direction, diversion of refractive index may be produced in the transverse direction. This phenomenon is sometimes found in a tenter method, and is considered to be due to so-called bowing phenomenon, which is caused by the fact that the film center shrinks and the film edges are fixed. In this case also, the bowing phenomenon is restrained by stretching the film in the casting direction, whereby diversion of refractive index in the transverse direction is minimized and improved.

Further, stretching in the two directions crossing at right angles each other can minimize variation of film thickness. Too much variation of film thickness causes unevenness of the optical retardation, resulting in color unevenness of images of a liquid crystal display.

Variation of thickness of cellulose ester film is preferably in the range within preferably ± 3%, and more preferably ± 1%. In order to meet the requirements described above, stretching in the two directions crossing at right angles each other is effective, wherein finally, the film is stretched in the casting direction by a magnification of preferably from 1.0 to 2.0, and in the transverse direction by a magnification of preferably from 1.01 to 2.5, and more preferably from 1.01 to 1.5 in the casting direction, and more preferably from 1.05 to 2.0 in the transverse direction.

When cellulose ester providing a positive birefringence to stress is employed, stretching in the transverse direction can give the delayed phase axis to the transverse direction of cellulose ester film. In order to improve display quality, the delayed phase axis is preferably in accordance with the transverse direction of film, and it is necessary to meet the relationship (stretching magnification in the transverse direction) > (stretching magnification in the casting direction).

The web stretching method is not specifically limited. As the stretching method, there are a method stretching film in the mechanical direction employing plural rollers having a different circumferential speed, a method stretching film in the mechanical direction by pulling clips or pins fixing the film edges in the mechanical direction, a method stretching film in the transverse direction by pulling clips or pins fixing the film edges in the transverse direction, and a method stretching film in the transverse direction and at the same time shrinking the film in the mechanical direction by pulling simultaneously clips or pins fixing the film edges in the mechanical and transverse directions. These methods may be used in combination. In a tenter method, when the clips are driven by a linear drive method, smooth stretching of film can be conducted, overcoming problems such as rupture of film.

In the film manufacture, holding of the film width or stretching in the transverse direction may be carried out employing a tenter, and the tenter may be a pin tenter or a clip tenter.

(Dimension stability)

In the cellulose ester film of the invention, variation of the film dimension is preferably within the range of ±1.0%, more preferably within the range of ±0.5%, and still more preferably within the range of ±0.1%, at 80 °C and at 90% RH for 24 hours, based on the film dimension after the film has been allowed to stand at 23 °C and at 55% RH for 24 hours.

(volatile component in the film)

The presence of an additive in a film composition restrains or inhibits the generation of volatile component by decomposition or quality change of at least one of film composing material, such as cellulose ester, a plasticizer, an anti-oxidant, or other material added according to necessity such as UV absorbent, retardation control agent. Further, the additive as it self is required not to generate volatile component in the range of meting temperature of the film composition.

The content of the volatile ingredient on the occasion of meting the film constitution materials is not more than 1%, preferably not more than 0.5%, further preferably not more than 0.2%, and still more preferably not more than 0.1%, by weight. The content of the volatile ingredient is determined by the weight reducing caused by heating from 30° to 350 °C measured by using a differential thermogravimeter TG/DTA200, manufactured by Seiko Electronics Inc.

## EXAMPLES

The invention is concretely described below referring examples but the invention is not limited to the followings. In the examples, "part" and "%" are each "part by weight" and "percent by weight", respectively unless any description is not attached.

Example 1

The following cellulose ester was washed by the following procedure.

(Synthesis of cellulose ester)

(Cellulose ester C-1)

Cellulose acetate propionate CAP-482-20, manufactured by Eastman Chemical Co., was used.

(Cellulose ester C-2)

Cellulose acetate butylate CAB-171-15, manufactured by Eastman Chemical Co., was used.

(Cellulose ester C-3)

Cellulose ester C-3 was synthesized by the method described in Example B of Item 8 of Patent Publication 7. Thus obtained cellulose acetate propionate had an acetyl substitution degree of 1.90, a propionyl substitution degree

of 0.71, a number average molecular weight of 70,000, a weight average molecular weight of 22,000 and a molecular weight distribution of 3.1.

(Measurement of molecular weight of cellulose ester)

The average molecular weight and the molecular weight distribution of the cellulose ester can be measured by a high performance liquid chromatography and the weight average molecular weight (Mw) was calculated using them.
The measuring conditions are as follows.

Measuring apparatus: HLC-8220 GPC, manufactured by Tosoh Corp.
Solvent: tetrahydrofuran
Column: TSK-GEL SuperHM-M
Column temperature: 40 °C
Sample concentration: 0.1 % by weight
Flowing amount: 0.6 ml/min

Calibration curve: A calibration curve was used which was prepared by using thirteen standard polystyrene TSK standard polystyrene samples, manufactured by Tosoh Corp., respectively having Mw of from 500 to 1000,000. The differences of the molecular weight between each of the thirteen samples were almost equal.

(Measurement of substitution degree of cellulose ester)

The substitution degree was measured as follows according to ASTM D817-96.
One point nine zero grams of dried cellulose ester was exactly weighed and dissolved by adding 70 ml of acetone and 30 ml of dimethylsulfoxide, and further 50 ml of acetone was added. While stirring, 30 ml of 1 mole/L aqueous solution of sodium hydroxide was added and the cellulose ester was saponified for 2 hours. After that, 100 ml of hot water was added and to wash the side wall of the flask and then the content of the flask was titrated by 0.5 moles/L solution of sulfuric acid using phenolphthalein as an indicator. Besides, a blank test was carried out in the same manner as the above. The supernatant of the liquid after titration was diluted by 100 times and the composition of the organic acid was determined by a usual method using ion chromatography. The substitution degree was calculated from the result of the measurement and the composition of the organic acid according to the following expression.

$$TA = (B - A) \times F/(1000 \times W)$$

$$X = (162.14 \times TA)/\{1 - 42.14 \times TA + (1 - SA \times TA) \times (Y/X)\}$$

$$Y = X \times (Y/X)$$

$$DS = X + Y$$

A: Titration amount of sample (ml)
B: Titration amount of blank test (ml)
F: Factor of 0.5 moles/L solution of sulfuric acid
W: Weight of sample (g)
TA: Total amount of organic acid (mole/g)
Y/X: Mole ratio of acetic acid to another acid measured by ion chromatography
X: Degree of substitution by acetic acid
Y: Degree of substitution by acid other than acetic acid
SA: Increasing of molecular weight caused by substitution by an acid other than acetic acid, namely a value of difference of molecular weight of the acid other than acetic acid and that of water (18.02)

For instance, SA is 56.06 and 116.16 as to propionic acid and caproic acid, respectively.

(Preparation of washed cellulose esters C-1-1 to C-1-23)

One hundred parts of cellulose ester C-1, 500 parts of methanol and 0.5 parts of IRGANOX 1010 as antioxidant (AO agent 1) were added and suspended and stirred for 3 hours at room temperature. After that, the cellulose ester was separated by filtration and obtained cellulose ester was dried for 3 hours at 70 °C under ordinary pressure to obtain washed cellulose ester C-1-1. As a result of determination of free acid in cellulose ester C-1-1 by the above-described method, the total amount of free acid composed of the carboxylic acid derivative and sulfuric acid used as the catalyst existing after washing was 1 ppm. Washed cellulose esters C-1-2 to C-1-23 were prepared in the same manner as in C-1-1 except that the kind of cellulose ester, solvent and antioxidant (AO agent 1, AO agent 2) listed in Table 1 were used. The free acid amounts of them were shown in Table 2.

(Preparation of cellulose ester film)

The above prepared washed cellulose ester C-1-1 (manufactured by Eastman Chemical Co., CAP482-20 was dried at 130 °C for 2 hours under ordinary pressure and stood for cooling by room temper. The following compounds was added in the following amounts were added and the resultant mixture was heated by the melting temperature of 230 °C and extruded and cast through a T-die and stretched in a ratio of 1.2 x 1.2 at 160 °C. Thus a film (Sample 1-1) having a thickness of 80 μm was obtained.

| | |
|---|---|
| C-1-1 | 100 parts by weight |
| Plasticizer, Exemplified compound 48 of Formula (I) | 10 parts by weight |
| LA31 (UV absorbent) | 1.0 part by weight |
| IRGANOX 1010 (antioxidant) | 0.5 parts by weight |
| Sumilizer GP (antioxidant) | 3.0 parts by weight |
| Epoxide bean oil (acid capturing agent) | 1.0 part by weight |
| Aerosil R972V (matting agent) | 0.3 parts by weight |

Cellulose ester film samples 1-2 to 1-23 each having a thickness of 80 μm were prepared in the same manner as the above except that C-1-1 was replaced by C-1-2 to C-1-23, respectively.

The compounds shown in Table 1 were as follows.

IRGANOX 245: Product of Ciba Specialty Chemicals
IRGANOX 1098: Product of Ciba Specialty Chemicals
Sumilizer GA-80: Product of Sumitomo Chemical Co., Ltd.
Sumilizer BBM-S: Product of Sumitomo Chemical Co., Ltd.

Table 1

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-1-1 | C-1 | methanol | 500 | - | - | Irganox1010 | 0.5 | - | - | Inv. |
| C-1-2 | C-1 | methanol | 500 | - | - | Irganox1076 | 0.5 | - | - | Inv. |
| C-1-3 | C-1 | methanol | 500 | - | - | Irganox1098 | 0.5 | - | - | Inv. |
| C-1-4 | C-1 | methanol | 500 | - | - | Irganox245 | 0.5 | - | - | Inv. |
| C-1-5 | C-1 | methanol | 500 | - | - | SumilizerGA-80 | 0.5 | - | - | Inv. |
| C-1-6 | C-1 | methanol | 500 | - | - | SumilizerBBM-S | 0.5 | - | - | Inv. |
| C-1-7 | C-1 | methanol | 500 | - | - | Irganox1010 | 0.3 | Irganox245 | 0.2 | Inv. |
| C-1-8 | C-1 | methanol | 500 | - | - | Irganox1010 | 0.25 | SumilizerBBM-S | 0.25 | Inv. |
| C-1-9 | C-1 | Heptane | 500 | - | - | Irganox1010 | 0.5 | - | - | Inv. |
| C-1-10 | C-1 | Octane | 500 | - | - | Irganox1010 | 0.5 | - | - | Inv. |
| C-1-11 | C-1 | Toluene | 500 | - | - | Irganox1010 | 0.5 | - | - | Inv. |
| C-1-12 | C-1 | Diethyl ether | 500 | - | - | Irganox1010 | 0.5 | - | - | Inv. |
| C-1-13 | C-1 | Diisopropyl ether | 500 | - | - | Irganox1010 | 0.5 | - | - | Inv. |
| C-1-14 | C-1 | Ethanol | 500 | - | - | Irganox1010 | 0.5 | - | - | Inv. |
| C-1-15 | C-1 | Butanol | 500 | - | - | Irganox1010 | 0.5 | - | - | Inv. |
| C-1-16 | C-1 | methanol | 480 | Tetrahydrofuran | 20 | Irganox1010 | 0.5 | - | - | Inv. |
| C-1-17 | C-1 | Heptane | 450 | Acetone | 50 | Irganox1010 | 0.5 | - | - | Inv. |
| C-1-18 | C-2 | methanol | 500 | - | - | Irganox1010 | 0.5 | - | - | Inv. |
| C-1-19 | C-3 | methanol | 500 | - | - | Irganox1010 | 0.5 | - | - | Inv. |
| C-1-20 | C-1 | methanol | 500 | - | - | - | - | - | - | Comp. |
| C-1-21 | C-1 | water | 500 | - | - | Irganox1010 | 0.5 | - | - | Comp. |
| C-1-22 | C-2 | water | 500 | - | - | Irganox1010 | 0.5 | - | - | Comp. |

(continued)

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-1-23 | C-3 | water | 500 | - | - | Irganox1010 | 0.5 | - | - | Comp. |
| *1: Adding amount (parts by weight), Inv.: Inventive, Comp.: Comparative | | | | | | | | | | |

Cellulose ester films prepared as above were subjected to the following evaluation. The results are listed in Table 2.

[Evaluation]

(Variation coefficient of retardation (CV))

The retardation of the obtained cellulose ester film was measured at every point with an interval of 1 cm on the width direction and the variation coefficient of the retardation calculated by the following expressions was determined. The measurement was carried out by using an automatic double refractometer KOBURA 21ADH, manufactured by Oji Scientific Instruments, at a wavelength of 590 nm and a condition of 23 °C and 55% RH. The three dimensional double refractive index was measured at the points arranged with an interval of 1 cm in the width direction of the sample and the results were applied to the following expressions.

In-face retardation Ro = (nx - ny) x d

Retardation in thickness direction Rt = ((nx + ny)/2 -nz) x d

In the above, di is the thickness of the film, nx is the maximum refractive index in-face of the film, also referred to as the refractive index in the also axis direction, ny is refractive index in-face in the direction crossing at right angle with the slow axis, and nz is the refractive index of the film in the thickness direction. The standard deviation of retardation values of in-face and that in the thickness direction were each calculated by the (n - 1) method. The variation coefficient (CV) of the retardation calculated by the following expression was used as the indicator of the distribution of the retardation values. In the actual measurement, n is set within the range of from 130 to 140.

Variation coefficient (CV) = Standard deviation/Averaged values of retardation

A: Variation (CV) was less than 1.5%
B: Variation (CV) was not less than 1.5% and less than 5%
C: Variation (CV) was not less than 5% and less than 10%
D: Variation (CV) was more than 10%

[Preparation of polarization plate]

Poly(vinyl alcohol) film of 120 μm was immersed in an aqueous solution containing 1 part by weight of iodine, 2 parts by weight of potassium iodide and 4 parts by weight of boric acid and stretched by 4 times at 50 °C to prepare polarization membrane.

Each of Sample 1-1 to 1-23 was subjected to an alkaline surface treatment by a 2.5M sodium hydroxide aqueous solution of 40 °C for 60 minutes and washed and dried. The alkaline treated surface of each of the cellulose ester films 1-1 to 1-23 was pasted on both sides of the above obtained polarization element using a 5% aqueous solution of completely saponified poly(vinyl alcohol) as an adhesive to prepare polarization plates 1-1 to 1-23 having protective films.

[Evaluation in the state of liquid crystal display]

The polarization plate of a 15-type TFT color liquid crystal display LA-1529HM, manufactured by NEC Corp., was peeled and the above prepared polarization plates were each cut in a size meeting with the size of the liquid crystal cell. Tow of the above prepared polarization plates were pasted on both sides of the liquid crystal cell so that the polarization axes of the polarization plates were crossed at right angle as the same as in the original apparatus to prepare a 15-type TFT color liquid crystal display, and then the display was subjected to evaluation as an image displaying apparatus.

(Evaluation of front view contrast)

The measurement was carried out after 30 minutes of lighting the backlight of the liquid crystal display at 23

°C and 55% RH. Front view luminance of white image and that of black image were measured by EZ-Contrast 160D, manufactured by ELDIM, and the front view contrast was determined by that ratio of them. Higher value is corresponding to higher contrast.

Front view contrast = Front view luminance of white image/Front view luminance of black image.

Table 2

| Sample No. | Free acid amount (ppm) | Retardation variation | Contrast | Remarks |
|---|---|---|---|---|
| 1-1 | 3 | A | 805 | Inventive |
| 1-2 | 6 | B | 765 | Inventive |
| 1-3 | 4 | A | 775 | Inventive |
| 1-4 | 1 | A | 775 | Inventive |
| 1-5 | 7 | B | 750 | Inventive |
| 1-6 | 5 | A | 760 | Inventive |
| 1-7 | 6 | A | 785 | Inventive |
| 1-8 | 2 | A | 770 | Inventive |
| 1-9 | 17 | A | 725 | Inventive |
| 1-10 | 41 | B | 760 | Inventive |
| 1-11 | 50 | B | 730 | Inventive |
| 1-12 | 32 | B | 710 | Inventive |
| 1-13 | 15 | A | 740 | Inventive |
| 1-14 | 17 | A | 705 | Inventive |
| 1-15 | 20 | A | 720 | Inventive |
| 1-16 | 11 | A | 725 | Inventive |
| 1-17 | 27 | B | 750 | Inventive |
| 1-18 | 5 | A | 820 | Inventive |
| 1-19 | 4 | A | 815 | Inventive |
| 1-20 | 9 | c | 610 | Comparative |
| 1-21 | 89 | E | 535 | Comparative |
| 1-22 | 69 | D | 550 | Comparative |
| 1-23 | 112 | E | 545 | Comparative |

As is shown in Table 2, Samples 1-1 to 1-19 were superior to Comparative Samples 1-20 to 1-23 in the retardation variation and the front view contrast of the polarization plate and the display using the samples and it was cleared that the samples of the invention was optically excellent.

The similar effects could be obtained even when the solvent to be used for washing the cellulose ester was replaced by cyclohexane, toluene, dipropyl ether, propyl alcohol or diisopropyl ether.

The similar effects could be obtained even when antioxidant to be used at the occasion of washing was replaced by 0.5 parts by weight of IRGANOX 565, IRGANOX 3114, each manufactured by Ciba specialty Chemicals, ADK STAB, AO-330, ADK STAB AO-30 or ADK STAB AO-40, each manufactured by Asahi Denka Co., Ltd.

The same effects can be obtained even when 0.5 parts by weight of IRGANOX 1010 and 3.0 parts by weight of Sumilizer GP to be used on the occasion of cellulose ester film formation were replaced by 0.5 parts by weight of Tinuvin 144, 0.5 parts by weight of Tinuvin 144 and 3.0 parts by weight of Sumilizer GP, or 0.5 parts by weight of

IRGANOX 1010 and 0.25 parts by weight of ADK STAB LA-52.

Example 2

Washed cellulose ester samples C-2-1 to C-2-43 were prepared in the same manner as in Example 1 except that the kind and the amount of cellulose ester, solvent and AO agent, and additive were changed as shown in Table 4. And then cellulose ester films 2-1 to 2-43 having a thickness of 80 μm were prepared by using the above washed cellulose esters, respectively.

The compounds listed in Tables 3 and 4 were as follows.

Chimassorb 944: Manufactured by Ciba Specialty Chemicals Inc.

Cyaasorb UV-3529: Manufactured b Cytec Industries Inc.

Irgafos P-EPQ: Manufactured by Ciba Specialty Chemicals Inc.

Irgafos 12: Manufactured by Ciba Specialty Chemicals Inc.

Table 3

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-2-1 | C-1 | Methanol | 500 | - | - | Tinuvin770 | 0.5 | - | - | Inv. |
| C-2-2 | C-1 | Methanol | 500 | - | - | ADK STAB LA-52 | 0.5 | - | - | Inv. |
| C-2-3 | C-1 | Methanol | 500 | - | - | CHIMASSORB944 | 0.5 | - | - | Inv. |
| C-2-4 | C-1 | Methanol | 500 | - | - | Cyasorb UV-3529 | 0.5 | - | - | Inv. |
| C-2-5 | C-1 | Methanol | 500 | - | - | Tinuvin770 | 0.2 | Irganox1010 | 0.3 | Inv. |
| C-2-6 | C-1 | Methanol | 500 | - | - | ADK STAB LA-52 | 0.2 | Irganox245 | 0.3 | Inv. |
| C-2-7 | C-1 | Methanol | 500 | - | - | Irgafos P-EPQ | 0.5 | - | - | Inv. |
| C-2-8 | C-1 | Methanol | 500 | - | - | Irgafos12 | 0.5 | - | - | Inv. |
| C-2-9 | C-1 | Methanol | 500 | - | - | PEP-24G | 0.5 | - | - | Inv. |
| C-2-10 | C-1 | Methanol | 500 | - | - | PEP-36 | 0.5 | - | - | Inv. |
| C-2-11 | C-1 | Methanol | 500 | - | - | Irgafos P-EPQ | 0.3 | Irganox1010 | 0.3 | Inv. |
| C-2-12 | C-1 | Methanol | 500 | - | - | PEP-36 | 0.3 | SumilizerBBM-S | 0.3 | Inv. |
| C-2-13 | C-1 | Methanol | 500 | - | - | SumilizerTPL-R | 0.5 | - | - | Inv. |
| C-2-14 | C-1 | Methanol | 500 | - | - | SumilizerTP-D | 0.5 | - | - | Inv. |
| C-2-15 | C-1 | Methanol | 500 | - | - | SumilizerTPL-R | 0.3 | Irganox1010 | 0.3 | Inv. |
| C-2-16 | C-1 | Heptane | 500 | - | - | ADK STAB LA-52 | 0.5 | - | - | Inv. |
| C-2-17 | C-1 | Octane | 500 | - | - | Tinuvin770 | 0.2 | Irganox1010 | 0.3 | Inv. |
| C-2-18 | C-1 | Toluene | 500 | - | - | SumilizerTPL-R | 0.3 | Irganox1010 | 0.3 | Inv. |
| C-2-19 | C-1 | Diethyl ether | 500 | - | - | Tinuvin770 | 0.5 | - | - | Inv. |
| C-2-20 | C-1 | Diisopropyl ether | 500 | - | - | PEP-36 | 0.3 | SumilizerBBM-S | 0.3 | Inv. |
| C-2-21 | C-1 | Ethanol | 500 | - | - | PEP-36 | 0.5 | - | - | Inv. |
| C-2-22 | C-1 | Butanol | 500 | - | - | ADK STAB LA-52 | 0.2 | Irganox245 | 0.3 | Inv. |

*1: Adding amount (parts by weight), Inv.: Inventive

Table 4

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-2-23 | C-1 | Methanol. | 480 | Tetrahydrofuran | 20 | Tinuvin770 | 0.5 | - | - | Inv. |
| C-2-24 | C-1 | Heptane | 450 | Acetone | 50 | SumilizerTPL-R | 0.5 | - | - | Inv. |
| C-2-25 | C-2 | Methanol | 500 | - | - | ADK STAB LA-52 | 0.5 | - | - | Inv. |
| C-2-26 | C-2 | Methanol | 500 | - | - | ADK STAB LA-52 | 0.2 | Irganox245 | 0.3 | Inv. |
| C-2-27 | C-2 | Methanol | 500 | - | - | PEP-36 | 0.5 | - | - | Inv. |
| C-2-28 | C-2 | Methanol | 500 | - | - | PEP-36 | 0.3 | SumilizerBBM-S | 0.3 | Inv. |
| C-2-29 | C-2 | Methanol | 500 | - | - | SumilizerTPL-R | 0.5 | - | - | Inv. |
| C-2-30 | C-2 | Methanol | 500 | - | - | SumilizerTPL-R | 0.3 | Irganox1010 | 0.3 | Inv. |
| C-2-31 | C-3 | Methanol | 500 | - | - | ADKSTABLA-52 | 0.5 | - | - | Inv. |
| C-2-32 | C-3 | Methanol | 500 | - | - | ADKBTABLA-52 | 0.2 | Irganox245 | 0.3 | Inv. |
| C-2-33 | C-3 | Methanol | 500 | - | - | PEP-36 | 0.5 | - | - | Inv. |
| C-2-34 | C-3 | Methanol | 500 | - | - | PEP-36 | 0.3 | SumilizerBBM-S | 0.3 | Inv. |
| C-2-35 | C-3 | Methanol | 500 | - | - | SumilizerTPL-R | 0.5 | - | - | Inv. |
| C-2-36 | C-3 | Methanol | 500 | - | - | SumilizerTPL-R | 0.3 | Irganox1010 | 0.3 | Inv. |
| C-2-37 | C-1 | Methanol | 500 | - | - | - | - | - | - | Comp. |
| C-2-38 | C-1 | Water | 500 | - | - | Tinuvin770 | 0.5 | - | - | Comp. |
| C-2-39 | C-1 | Water | 500 | - | - | Tinuvin770 | 0.2 | Irganox1010 | 0.3 | Comp. |
| C-2-40 | C-2 | Water | 500 | - | - | PEP-36 | 0.5 | - | - | Comp. |
| C-2-41 | C-2 | Water | 500 | - | - | PEP-36 | 0.3 | SumilizerBBM-S | 0.3 | Comp. |
| C-2-42 | C-3 | Water | 500 | - | - | SumilizerTPL-R | 0.5 | - | - | Comp. |
| C-2-43 | C-3 | Water | 500 | - | - | SumilizerTPL-R | 0.3 | Irganox1010 | 0.3 | Comp. |

*1: Adding amount (parts by weight), Inv.: Inventive, Comp.: Comparative

Thus prepared films were subjected to evaluation the same as in Example 1. The results are shown in Table 5.

Table 5

| Sample No. | Free acid amount (ppm) | Retardation variation | Contrast | Remarks |
|---|---|---|---|---|
| 2-1 | 6 | A | 785 | Inventive |
| 2-2 | 4 | A | 775 | Inventive |
| 2-3 | 3 | B | 790 | Inventive |
| 2-4 | 6 | B | 760 | Inventive |
| 2-5 | 1 | A | 770 | Inventive |
| 2-6 | 5 | A | 795 | Inventive |
| 2-7 | 9 | B | 795 | Inventive |
| 2-8 | 6 | A | 800 | Inventive |
| 2-9 | 6 | A | 765 | Inventive |
| 2-10 | 3 | A | 750 | Inventive |
| 2-11 | 7 | A | 725 | Inventive |
| 2-12 | 4 | A | 820 | Inventive |
| 2-13 | 10 | B | 785 | Inventive |
| 2-14 | 7 | B | 760 | Inventive |
| 2-15 | 5 | A | 760 | Inventive |
| 2-16 | 17 | A | 750 | Inventive |
| 2-17 | 50 | B | 715 | Inventive |
| 2-18 | 34 | B | 730 | Inventive |
| 2-19 | 40 | B | 705 | Inventive |
| 2-20 | 16 | A | 750 | Inventive |
| 2-21 | 18 | A | 775 | Inventive |
| 2-22 | 13 | A | 770 | Inventive |
| 2-23 | 20 | A | 790 | Inventive |
| 2-24 | 13 | A | 755 | Inventive |
| 2-25 | 9 | A | 795 | Inventive |
| 2-26 | 7 | A | 805 | Inventive |
| 2-27 | 8 | A | 815 | Inventive |
| 2-28 | 8 | A | 875 | Inventive |
| 2-29 | 6 | A | 750 | Inventive |
| 2-30 | 6 | B | 765 | Inventive |
| 2-31 | 4 | A | 790 | Inventive |
| 2-32 | 5 | A | 815 | Inventive |
| 2-33 | 7 | A | 755 | Inventive |
| 2-34 | 6 | A | 820 | Inventive |
| 2-35 | 5 | A | 780 | Inventive |
| 2-36 | 5 | A | 785 | Inventive |
| 2-37 | 8 | C | 570 | Comparative |

(continued)

| Sample No. | Free acid amount (ppm) | Retardation variation | Contrast | Remarks |
|---|---|---|---|---|
| 2-38 | 148 | E | 545 | Comparative |
| 2-39 | 170 | D | 560 | Comparative |
| 2-40 | 156 | E | 560 | Comparative |
| 2-41 | 182 | D | 585 | Comparative |
| 2-42 | 122 | E | 580 | Comparative |
| 2-43 | 105 | E | 590 | Comparative |

As is shown in Table 5, Samples 2-1 to 2-36 were superior to Comparative Samples 2-37 to 2-43 in the retardation variation and the front view contrast of the polarization plate and the display using the samples and it was cleared that the samples of the invention was optically excellent.

The similar effects could be obtained even when the solvent to be used for washing the cellulose ester was changed to cyclohexane, toluene, dipropyl ether, propyl alcohol or diisopropyl ether.

The similar effects could be obtained even when the OA agent 1 to be used on the occasion of washing the cellulose ester was replaced by single use of 0.5 parts by weight of ADK STAB LA-57, CHIMASSORB 2020, LP-63P, LP-68LD or Cyasorb UV-3346 or combination use of 0.2 parts by weight of the foregoing hindered amine type compound and 0.3 parts by weight of IRGANOX 1010, IRGANOX 245 or Sumilizer BBM-S.

The similar effects could be obtained even when the OA agent 1 to be used on the occasion of washing the cellulose ester was replaced by single use of 0.5 parts by weight of ADK STAB PEP-8, ADK STAB 2112, ADK STAB 135A, ADK STAB HP-10, Sumilizer TL, Sumilizer TPM or Sumilizer TPS or combination use of 0.3 parts by weight of the foregoing hindered amine type compound and 0.3 parts by weight of IRGANOX 1010, IRGANOX 245 or Sumilizer BBM-S.

The similar effects could be obtained even when 0.5 parts by weight of IRGANOX 1010 and 3.0 parts by weight of Sumilizer GP to be used on the occasion of the film production was replaced by 0.5 parts by weight of Tinuvin 144, 0.5 parts by weight of Tinuvin 144 and 3.0 parts by weight of Sumilizer GP, or 0.5 parts by weight of IRGANOX 1010 and 0.25 parts by weight of ADK STAB LA-52.

Example 3

Washed cellulose ester samples C-3-1 to C-3-36 were prepared in the same manner as in Example 1 except that the kind and the amount of cellulose ester, solvent and OA agent, and additive were changed as shown in Tables 6 and 7. And then cellulose ester films 3-1 to 3-36 having a thickness of 80 μm were prepared by using the above washed cellulose esters, respectively.

Table 6

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-3-1 | C-1 | Methanol | 500 | - | - | Tinuvin144 | 0.5 | - | | Inv. |
| C-3-2 | C-1 | Methanol | 500 | - | - | Sanol LS-2626 | 0.5 | - | - | Inv. |
| C-3-3 | C-1 | Methanol | 500 | - | - | Compound 3 | 0.5 | - | - | Inv. |
| C-3-4 | C-1 | Methanol | 500 | - | - | Compound 19 | 0.5 | - | - | Inv. |
| C-3-5 | C-1 | Methanol | 500 | - | - | Tinuvin144 | 0.4 | Irganox1010 | 0.1 | Inv. |
| C-3-6 | C-1 | Methanol | 500 | - | - | Tinuvin144 | 0.4 | Tinuvin770 | 0.1 | Inv. |
| C-3-7 | C-1 | Methanol | 500 | - | - | Tinuvin44 | 0.4 | PEP-36 | 0.1 | Inv. |
| C-3-8 | C-1 | Methanol | 500 | - | - | Tinuvin144 | 0.4 | SumilizerTPL-R | 0.1 | Inv. |

(continued)

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-3-9 | C-1 | Methanol | 500 | - | - | SumilizerGP | 0.5 | - | - | Inv. |
| C-3-10 | C-1 | Methanol | 500 | - | - | Compound A | 0.5 | - | - | Inv. |
| C-3-11 | C-1 | Methanol | 500 | - | - | SumilizerGP | 0.4 | Irganox1010 | 0.1 | Inv. |
| C-3-12 | C-1 | Methanol | 500 | - | - | SumilizerGP | 0.4 | Tinuvin770 | 0.1 | Inv. |
| C-3-13 | C-1 | Methanol | 500 | - | - | SumilizerGP | 0.4 | PEP-36 | 0.1 | Inv. |
| C-3-14 | C-1 | Methanol | 500 | - | - | SumilizerGP | 0.4 | SumilizerTPL-R | 0.1 | Inv. |
| C-3-15 | C-1 | Heptane | 500 | - | - | SumilizerGP | 0.5 | - | - | Inv. |
| C-3-16 | C-1 | Octane | 500 | - | - | SumilizerGP | 0.4 | Irganox1010 | 0.1 | Inv. |
| C-3-17 | C-1 | Toluene | 500 | - | - | SumilizerGP | 0.4 | PEP-36 | 0.1 | Inv. |
| C-3-18 | C-1 | Diethyl ether | 500 | - | - | Tinuvin144 | 0.5 | - | - | Inv. |
| *1: Adding amount (parts by weight), Inv.: Inventive | | | | | | | | | | |

Table 7

| Washed cellulose ester | Cellulose ester | Solvent | *1 | Solvent | *1 | AO agent 1 | *1 | AO agent 2 | *1 | Remarks |
|---|---|---|---|---|---|---|---|---|---|---|
| C-3-19 | C-1 | Diisopropyl ether | 500 | - | - | Tinuvin144 | 0.4 | Tinuvin770 | 0.1 | Inv. |
| C-3-20 | C-1 | Ethanol | 500 | - | - | Tinuvin144 | 0.4 | SumilizerTPL-R | 0.1 | Inv. |
| C-3-21 | C-1 | Butanol | 500 | - | - | Tinuvin144 | 0.5 | - | - | Inv. |
| C-3-22 | C-1 | Methanol | 480 | Tetrahydrofuran | 20 | SumilizerGP | 0.4 | Tinuvin770 | 0.1 | Inv. |
| C-3-23 | C-1 | Heptane | 450 | Acetone | 50 | SumilizerGP | 0.4 | Tinuvin770 | 0.1 | Inv. |
| C-3-24 | C-2 | Methanol | 500 | - | - | SumilizerGP | 0.5 | - | - | Inv. |
| C-3-25 | C-2 | Methanol | 500 | - | - | SumilizerGP | 0.4 | Irganox1010 | 0.1 | Inv. |
| C-3-26 | C-2 | Methanol | 500 | - | - | SumilizerGP | 0.4 | PEP-36 | 0.1 | Inv. |
| C-3-27 | C-3 | Methanol | 500 | - | - | Tinuvin144 | 0.5 | - | - | Inv. |
| C-3-28 | C-3 | Methanol | 500 | - | - | Tinuvin144 | 0.4 | Tinuvin770 | 0.1 | Inv. |
| C-3-29 | C-3 | Methanol | 500 | - | - | Tinuvin44 | 0.4 | SumilizerTPL-R | 0.1 | Inv. |
| C-3-30 | C-1 | Methanol | 500 | - | - | - | - | - | - | Comp. |
| C-3-31 | C-1 | Water | 500 | - | - | SumilizerGP | 0.5 | - | - | Comp. |
| C-3-32 | C-1 | Water | 500 | - | - | SumilizerGP | 0.4 | Irganox1010 | 0.1 | Comp. |
| C-3-33 | C-2 | Water | 500 | - | - | SumilizerGP | 0.4 | PEP-36 | 0.1 | Comp. |
| C-3-34 | C-2 | Water | 500 | - | - | Tinuvin144 | 0.5 | - | - | Comp. |
| C-3-35 | C-3 | Water | 500 | - | - | Tinuvin144 | 0.4 | Tinuvin770 | 0.1 | Comp. |
| C-3-36 | C-3 | Water | 500 | - | - | Tinuvin144 | 0.4 | SumilizerTPL-R | 0.1 | Comp. |

*1: Adding amount (parts by weight), Inv.: Inventive, Comp.: Comparative

The compounds shown in Tables 6 and 7 were as follows.

Sanol LS-2626: Product of Sankyo Lifetec Co., Ltd.

Compound A: 6-[3-(3,5-di-tert-butyl-4-hydroxyphenyl)-propoxy]-2,4,8,10-tetrakis-tert-butylbenzo[d,f][1,3,2]-dioxaphosphepine

Compounds 3 and 19 shown in the tables were the following compounds.

Compound 3

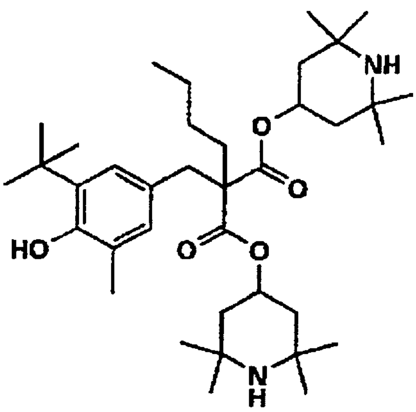

Compound 19

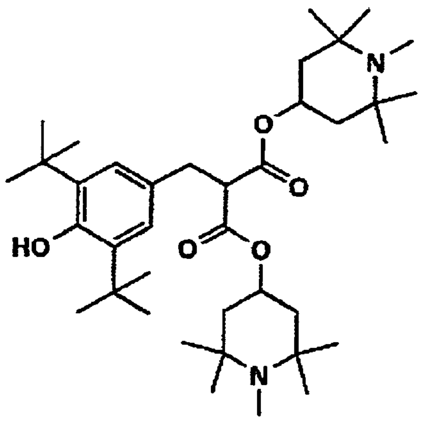

Thus prepared film samples were subjected to evaluation the same as in Example 1. The results are shown in Table 8.

Table 8

| Sample No. | Free acid amount (ppm) | Retardation variation | Contrast | Remarks |
|---|---|---|---|---|
| 3-1 | 11 | A | 780 | Inventive |
| 3-2 | 7 | B | 760 | Inventive |
| 3-3 | 9 | A | 795 | Inventive |
| 3-4 | 4 | B | 795 | Inventive |
| 3-5 | 4 | A | 805 | Inventive |
| 3-6 | 8 | A | 815 | Inventive |
| 3-7 | 5 | A | 820 | Inventive |
| 3-8 | 1 | B | 785 | Inventive |
| 3-9 | 13 | A | 775 | Inventive |
| 3-10 | 5 | A | 770 | Inventive |
| 3-11 | 6 | A | 765 | Inventive |
| 3-12 | 6 | A | 790 | Inventive |
| 3-13 | 7 | A | 785 | Inventive |
| 3-14 | 4 | B | 850 | Inventive |
| 3-15 | 15 | A | 835 | Inventive |
| 3-16 | 50 | A | 755 | Inventive |
| 3-17 | 46 | B | 740 | Inventive |
| 3-18 | 39 | B | 770 | Inventive |
| 3-19 | 20 | B | 780 | Inventive |
| 3-20 | 14 | B | 810 | Inventive |

(continued)

| Sample No. | Free acid amount (ppm) | Retardation variation | Contrast | Remarks |
|---|---|---|---|---|
| 3-21 | 18 | A | 795 | Inventive |
| 3-22 | 17 | A | 775 | Inventive |
| 3-23 | 16 | B | 795 | Inventive |
| 3-24 | 8 | A | 800 | Inventive |
| 3-25 | 15 | A | 825 | Inventive |
| 3-26 | 10 | A | 820 | Inventive |
| 3-27 | 7 | A | 895 | Inventive |
| 3-28 | 9 | A | 870 | Inventive |
| 3-29 | 6 | A | 885 | Inventive |
| 3-30 | 7 | C | 595 | Comparative |
| 3-31 | 154 | E | 570 | Comparative |
| 3-32 | 169 | D | 605 | Comparative |
| 3-33 | 133 | E | 585 | Comparative |
| 3-34 | 146 | D | 570 | Comparative |
| 3-35 | 110 | E | 590 | Comparative |
| 3-36 | 167 | E | 590 | Comparative |

As is shown in Table 8, Samples 3-1 to 3-29 were superior to Comparative Samples 3-30 to 3-36 in the retardation variation and the front view contrast of the polarization plate and the display using the samples and it was cleared that the samples of the invention was optically excellent.

The similar effects could be obtained even when the solvent to be used for washing the cellulose ester was replaced by cyclohexane, toluene, dipropyl ether, propyl alcohol or diisopropyl ether.

The similar effects could be obtained even when the single use of the AO agent 1 of 0.5 parts by weight of the following Compound 2, 6, 12, 14, 15, 18, 26, 39 or 50 was replaced by combination use of 0.4 parts by weight of the foregoing compound having the phenol structure and the hindered amine structure in the molecule thereof and 0.1 parts by weight of one of IRGANOX 1010, Tinuvin 770, ADK STAB PEP-36 and Sumilizer TPL-R.

Compound 2

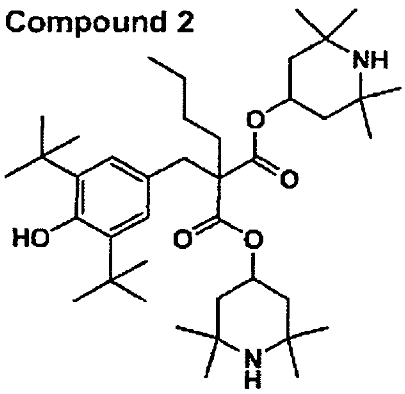

Compound 6

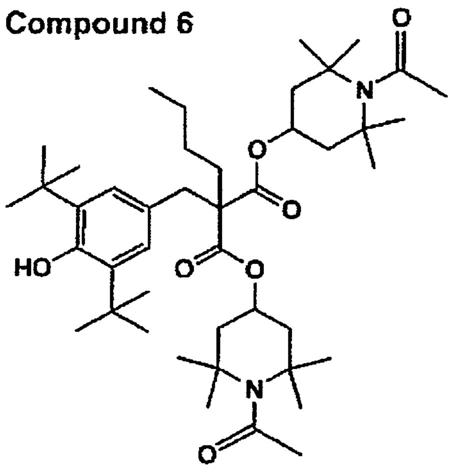

Compound 12

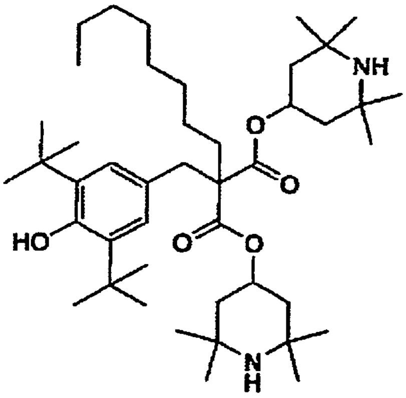

Compound 14

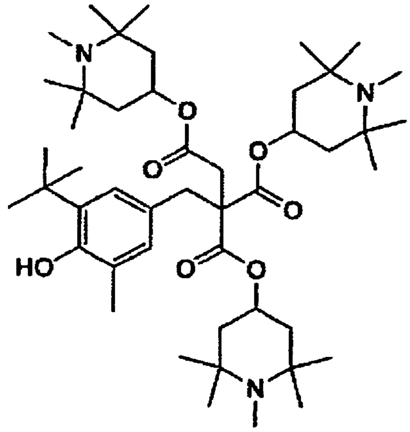

Compound 15

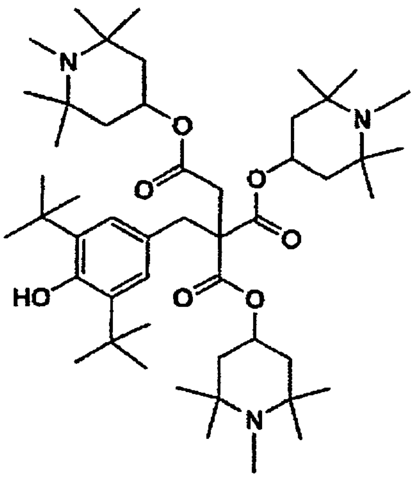

Compound 18

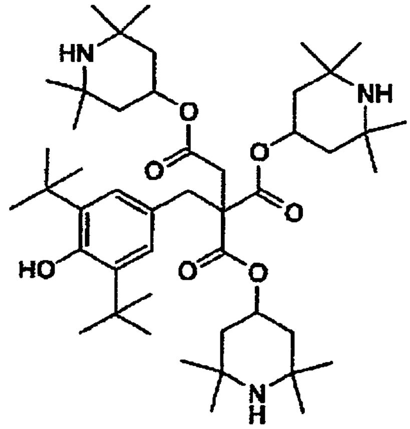

Compound 26

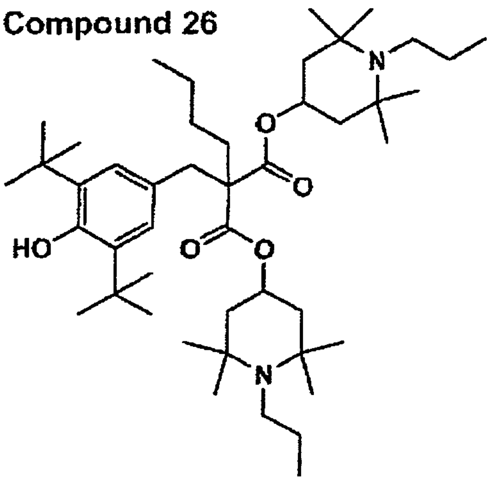

Compound 39

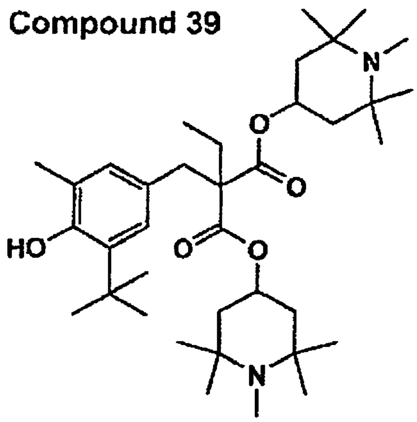

Compound 50

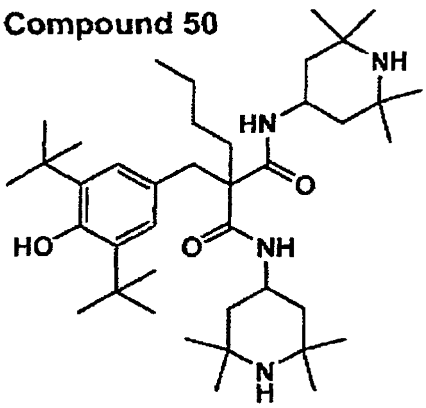

The similar effects could be obtained even when 0.5 parts by weight of IRGANOX 1010 and 3.0 parts by weight of Sumilizer GP to be used on the occasion of production of the cellulose ester film were replaced by 0.5 parts by weight of Tinuvin 144, 0.5 parts by weight of Tinuvin 144 and 3.0 parts by weight of Sumilizer GP or 0.5 parts by weight of IRGANOX 1010 and 0.25 parts by weight of ADK STAB LA-52. Moreover, the similar effects also could be obtained when the above additives were replaced by 0.5 parts by weight of IRGANOX 565, IRGANOX 3114, ADK STAB AO-330, ADK STAB AO-30 or ADK STAB AO-40.

## Claims

1. A process for producing cellulose ester film comprising the steps of
suspending a cellulose ester in an organic poor solvent of cellulose ester;
washing suspension of cellulose ester by an organic poor solvent of cellulose ester in the presence of an antioxidant to obtain cellulose ester in solid state having a free acid content of not more than 50 ppm; and
forming film by melting and casting the cellulose ester.

2. The process of claim 1, wherein the antioxidant is a phenol type compound.

3. The process of claim 1 or 2, wherein the antioxidant is a hindered amine type compound, a phosphite ester type compound or a sulfur type compound.

4. The process of any one of claims 1 to 3, wherein the antioxidant is a compound having a phenol structure and a hindered amine structure in the molecule thereof or a compound having a phenol structure and a phosphite ester structure in the molecule thereof.

5. The process of any one of claims 1 to 4, wherein the organic poor solvent of cellulose ester is a protic polar solvent having 1 to 4 carbon atoms.

6. The process of any one of claims 1 to 5, wherein the amount of the free organic acid contained in the cellulose ester is within the range of from 1 to 20 ppm.

## Patentansprüche

1. Verfahren zur Herstellung eines Celluloseesterfilms, umfassend die Stufen:

   Suspendieren eines Celluloseesters in einem organischen schlechten Lösemittel für Celluloseester;
   Waschen der Suspension des Celluloseesters durch ein organisches schlechtes Lösemittel für Celluloseester in Gegenwart eines Antioxidationsmittels, wobei ein Celluloseester in festem Zustand mit einem Gehalt an freier Säure von nicht mehr als 50 ppm erhalten wird; und
   Bilden eines Films durch Erschmelzen und Gießen des Celluloseesters.

2. Verfahren nach Anspruch 1, wobei das Antioxidationsmittel eine Verbindung des Phenoltyps ist.

3. Verfahren nach Anspruch 1 oder 2, wobei das Antioxidationsmittel eine Verbindung des Typs eines gehinderten Amins, eine Verbindung des Typs eines Phosphitesters oder eine Verbindung des Schwefeltyps ist.

4. Verfahren nach einem der Ansprüche 1 bis 3, wobei das Antioxidationsmittel eine Verbindung mit einer Phenolstruktur und einer Struktur eines gehinderten Amins in dem Molekül derselben oder eine Verbindung mit einer Phenolstruktur und einer Phosphitesterstruktur in dem Molekül derselben ist.

5. Verfahren nach einem der Ansprüche 1 bis 4, wobei das organische schlechte Lösemittel für Celluloseester ein protisches polares Lösemittel mit 1 bis 4 Kohlenstoffatomen ist.

6. Verfahren nach einem der Ansprüche 1 bis 5, wobei die Menge an der freien organischen Säure, die in dem Celluloseester enthalten ist, innerhalb des Bereichs von 1 bis 20 ppm liegt.

## Revendications

1. Procédé de production d’un film en ester de cellulose comprenant les étapes consistant à
mettre en suspension un ester de cellulose dans un solvant organique médiocre d’ester de cellulose ;
laver la suspension d’ester de cellulose à l’aide d’un solvant organique médiocre d’ester de cellulose en présence d’un antioxydant pour obtenir un ester de cellulose à l’état solide ayant une teneur en acide libre qui n’excède pas 50 ppm ; et
former un film en faisant fondre et en coulant l’ester de cellulose.

2. Procédé selon la revendication 1, dans lequel l’antioxydant est un composé de type phénol.

3. Procédé selon la revendication 1 ou 2, dans lequel l’antioxydant est un composé de type amine encombrée, un composé de type ester de phosphite ou un composé de type soufre.

4. Procédé selon l’une quelconque des revendications 1 à 3, dans lequel l’antioxydant est un composé ayant une structure phénol et une structure amine encombrée dans la molécule de celui-ci ou un composé ayant une structure phénol et une structure ester de phosphite dans la molécule de celui-ci.

5. Procédé selon l’une quelconque des revendications 1 à 4, dans lequel le solvant organique médiocre d’ester de cellulose est un solvant polaire protique comportant de 1 à 4 atomes de carbone.

6. Procédé selon l’une quelconque des revendications 1 à 5, dans lequel la quantité d’acide organique libre contenue dans l’ester de cellulose est située dans la plage de 1 à 20 ppm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1095861 A
- JP 2003192920 A
- JP 2003012823 A
- JP 2003096236 A
- JP H11222493 A
- JP H08134101 A
- JP H06501040 A
- JP 2000352620 A
- GB 459820 A
- US 4137201 A
- GB 516945 A
- JP 2005300978 A
- JP 58022510 A
- JP H06504010 A
- JP H1045804 A
- JP 2003252901 A
- JP S5315165 B
- JP H10298201 A
- US 4839405 A
- JP H05194788 A
- JP H10182621 A
- JP H08337574 A
- JP H06148430 A


### Non-patent literature cited in the description


- **J. N. ISRAELACHIBIRI.** inter-molecular force and surface force. McGraw-Hill, 1991